(19) Europäisches Patentamt
European Patent Office
Office européen des brevets

(11) **EP 4 149 181 A1**

(12) **EUROPEAN PATENT APPLICATION**
published in accordance with Art. 153(4) EPC

(43) Date of publication:
**15.03.2023 Bulletin 2023/11**

(21) Application number: **21825713.7**

(22) Date of filing: **02.06.2021**

(51) International Patent Classification (IPC):
**H04W 64/00** (2009.01)

(52) Cooperative Patent Classification (CPC):
**H04W 64/00; H04W 72/04; H04W 72/54;
H04W 76/27**

(86) International application number:
**PCT/CN2021/097858**

(87) International publication number:
**WO 2021/254147 (23.12.2021 Gazette 2021/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **19.06.2020 CN 202010564722
23.10.2020 CN 202011150416**

(71) Applicant: **HUAWEI TECHNOLOGIES CO., LTD.
Shenzhen, Guangdong 518129 (CN)**

(72) Inventors:
• **LIU, Mengting**
  **Shenzhen, Guangdong 518129 (CN)**
• **CHANG, Junren**
  **Shenzhen, Guangdong 518129 (CN)**
• **HUANG, Su**
  **Shenzhen, Guangdong 518129 (CN)**

(74) Representative: **Pfenning, Meinig & Partner mbB
Patent- und Rechtsanwälte
Theresienhöhe 11a
80339 München (DE)**

(54) **METHOD FOR DETERMINING TIME ADVANCE (TA), AND NETWORK DEVICE AND TERMINAL**

(57)  This application provides a method for determining a timing advance TA and a communication apparatus. A terminal device in a non-connected state obtains, by using a radio resource control release RRC Release message or a paging message, timing advance indication information, for example, a radio network temporary identifier of a timing advance command, a timing advance command sending period, timing advance command duration, and a timing advance command reception window. Therefore, the terminal device in the non-connected state can determine a TA value based on the timing advance indication information. The technical solutions of this application may further be applied to a positioning scenario, to position the terminal device in the non-connected state. In comparison with the conventional solutions, power consumption of the terminal device is reduced.

FIG. 3

## Description

This application claims priority to Chinese Patent Application No. 202010564722.5, filed with the China National Intellectual Property Administration on June 19, 2020 and entitled "METHOD FOR DETERMINING TIMING ADVANCE TA, NETWORK DEVICE, AND TERMINAL", and priority to Chinese Patent Application No. 202011150416.3, filed with the China National Intellectual Property Administration on October 23, 2020 and entitled "METHOD FOR DETERMINING TIMING ADVANCE TA, NETWORK DEVICE, AND TERMINAL", which are incorporated herein by reference in their entireties.

## TECHNICAL FIELD

This application relates to the field of wireless communication technologies, and more specifically, to a method for determining a timing advance TA, a network device, and a terminal.

## BACKGROUND

A timing advance (Time Advance, TA) is usually used by a terminal device for uplink transmission, and means that the terminal device sends a system frame of uplink data a specific time in advance with respect to receiving of a downlink frame. A main reason for introducing the TA is that an important feature of uplink transmission is that different terminal devices perform orthogonal multiple access in time and frequency, that is, uplink transmission of different terminal devices from a same cell does not have mutual interference. To ensure orthogonality of uplink transmission and avoid intra-cell interference, a network device requires that time at which signals that are of different terminal devices and that are from a same subframe but different frequency domain resources arrive at the network device is basically aligned. As long as the network device receives, within a range of a cyclic prefix (Cyclic Prefix, CP), uplink data sent by the terminal device, the network device can correctly decode the uplink data. Therefore, uplink synchronization requires that time at which signals of different terminal devices and from a same subframe arrive at the network device falls within the CP.

A TA technology in the conventional technology is for a terminal device in a connected state, and there is no TA solution for a terminal device in a non-connected state.

## SUMMARY

This application provides a method for determining a timing advance TA, a network device, and a terminal, so that a terminal device in a non-connected state can determine a TA value.

According to a first aspect, this application provides a method for determining a timing advance TA. The method includes: A terminal device in a non-connected state receives first indication information from a network device, where the first indication information includes one or more pieces of the following information:

a radio network temporary identifier of a timing advance command, a timing advance command sending period, timing advance command duration, and a timing advance command reception window; and
the terminal device determines a TA of the terminal device in the non-connected state based on the first indication information.

In this embodiment of this application, the first indication information provided by the network device is obtained. The first indication information includes TAC-related indication information. Based on this solution, the terminal device in the non-connected state can calculate the TA value based on the first indication information.

With reference to the first aspect, in a possible implementation, the terminal device receives second indication information from the network device, where the second indication information is used to indicate a candidate time-frequency location of a physical downlink control channel PDCCH.

Based on this solution, the terminal device obtains the candidate time-frequency location of the PDCCH by obtaining the second indication information from the network device. Blind detection performed by the terminal device at the candidate time-frequency location of the PDCCH can effectively reduce a quantity of times of blind detection performed by the terminal device, and improve blind detection efficiency.

With reference to the first aspect, in a possible implementation, the first indication information is carried in an RRC Release message or a paging message.

Based on this solution, the terminal device in the non-connected state can obtain the first indication information from the RRC Release message or the paging message, so that TA calculation of the terminal device in the non-connected state is implemented.

With reference to the first aspect, in a possible implementation, the second indication information is carried in the RRC Release message or the paging message.

Based on this solution, the terminal device in the non-connected state can obtain the second indication information from the RRC Release message or the paging message, and determine the candidate time-frequency location of the PDCCH based on the second indication information, to improve blind detection efficiency.

With reference to the first aspect, in a possible implementation, the second indication information includes a control resource set identifier and a search space identifier.

Based on this solution, the terminal device can obtain the candidate time-frequency location of the PDCCH based on the control resource set identifier and the search space identifier that are included in the second indication information, so that a quantity of times of blind detection performed by the terminal device on the PDCCH is reduced, and blind detection efficiency is improved.

With reference to the first aspect, in a possible implementation, that the terminal device determines a TA of the terminal device in the non-connected state based on the first indication information and the second indication information specifically includes:

The terminal device receives a periodic TAC from the network device based on the first indication information and the second indication information; and

the terminal device determines the TA of the terminal device based on the TAC.

Based on this solution, the terminal device determines the candidate time-frequency location of the PDCCH by using the second indication information, performs blind detection at the candidate time-frequency location of the PDCCH, further determines, based on the first indication information, a time-frequency resource block corresponding to downlink data transmitted on a physical downlink shared channel (Physical Downlink Shared Channel, PDSCH), monitors, on the time-frequency resource, the TAC periodically delivered by the network device, determines a TA corresponding to each period, and overwrites, based on a TA obtained through calculation in a next period, a TA obtained through calculation in a previous period, to implement periodic updating of the TA.

With reference to the first aspect, in a possible implementation, that the terminal device determines a TA of the terminal device in the non-connected state based on the first indication information specifically includes:

The terminal device parses, based on the radio network temporary identifier of the timing advance command, downlink control information DCI that carries the timing advance command TAC;

the terminal device receives, based on the DCI and the timing advance command sending period, the TAC periodically delivered by the network device; and

the terminal device determines the TA of the terminal device based on the TAC.

With reference to the first aspect, in a possible implementation, the RRC Release message or the paging message further includes time-frequency resource configuration information of a sounding reference signal.

Optionally, the time-frequency resource configuration information of the sounding reference signal may include a sounding reference signal (Sounding Reference Signal, SRS) type, for example, a periodic SRS, an aperiodic SRS, and a semi-persistent SRS. The time-frequency resource configuration information of the sounding reference signal may alternatively include frequency domain location information, a resource element mapping pattern (Resource Element Pattern) related parameter, including a comb size comb size, a cyclic shift, and the like. The time-frequency resource configuration information of the sounding reference signal may alternatively include resource mapping information, including an SRS time domain location, a start location, a quantity of symbols, and the like. This application sets no specific limitation thereto.

With reference to the first aspect, in a possible implementation, the terminal device in the non-connected state sends a sounding reference signal SRS to the network device based on the time-frequency resource configuration information of the sounding reference signal.

With reference to the first aspect, in a possible implementation, the SRS is used to assist in positioning of the terminal device in the non-connected state.

Based on this solution, the terminal device in the non-connected state can send the sounding reference signal SRS to assist in positioning of the terminal device in the non-connected state. Compared with sending of the SRS by the terminal device in a connected state to implement positioning, power consumption is reduced.

According to a second aspect, this application provides a method for determining a timing advance TA. The method includes: A network device sends first indication information to a terminal device in a non-connected state, where the first indication information includes one or more pieces of the following information:

a radio network temporary identifier of a timing advance command, a timing advance command sending period, timing advance command duration, and a timing advance command reception window.

The first indication information is used by the terminal device to determine a TA of the terminal device in the non-connected state.

With reference to the second aspect, in a possible implementation, the method further includes: The network device sends second indication information to the terminal device in the non-connected state, where the second indication information is used to indicate a candidate time-frequency location of a physical downlink control channel PDCCH.

With reference to the second aspect, in a possible implementation, the first indication information is carried in an RRC Release message or a paging message.

With reference to the second aspect, in a possible implementation, the second indication information includes a control resource set identifier and a search space identifier.

With reference to the second aspect, in a possible implementation, the network device periodically sends the timing advance command TAC to the terminal device in the non-connected state.

With reference to the second aspect, in a possible implementation, the RRC Release message or the paging message further includes time-frequency resource configuration information of a sounding reference signal.

With reference to the second aspect, in a possible implementation, the method further includes: The network device performs related measurement on a sounding reference signal SRS sent by the terminal device in the non-connected state, to obtain a measurement result, where the measurement result is used to assist in positioning of the terminal device in the non-connected state.

For technical effects brought by any implementation of the second aspect, refer to the technical effects brought by different implementations of the first aspect. Details are not described herein again.

According to a third aspect, this application provides a terminal device. The terminal device is configured to perform the method in any possible implementation of the first aspect. The terminal device may be the terminal device in any possible implementation of the first aspect, or may be a module applied to the terminal device, for example, a chip or a chip system. The terminal device includes a module, a unit, a means (means), or the like corresponding to the method performed by the terminal device in any possible implementation of the first aspect. The module, the unit, or the means may be implemented by using hardware, software, or hardware executing corresponding software. The hardware or software includes one or more modules or units corresponding to a function performed by the terminal device in any possible implementation of the first aspect.

The terminal device includes: a transceiver unit, configured to receive first indication information from a network device, where the first indication information includes one or more pieces of the following information:

a radio network temporary identifier of a timing advance command, a timing advance command sending period, timing advance command duration, and a timing advance command reception window; and
a processing unit, configured to determine a TA of the terminal device in a non-connected state based on the first indication information.

With reference to the third aspect, in a possible implementation, the transceiver unit is further configured to receive second indication information from the network device, where the second indication information is used to indicate a candidate time-frequency location of a physical downlink control channel PDCCH.

With reference to the third aspect, in a possible implementation, the first indication information is carried in an RRC Release message or a paging message.

With reference to the third aspect, in a possible implementation, the second indication information is carried in the RRC Release message or the paging message.

With reference to the third aspect, in a possible implementation, the second indication information includes a control resource set identifier and a search space identifier.

With reference to the third aspect, in a possible implementation, the transceiver unit receives a periodic TAC from the network device based on the first indication information and the second indication information.

The processing unit is configured to determine the TA of the terminal device based on the TAC.

With reference to the third aspect, in a possible implementation, the processing unit parses, based on the radio network temporary identifier of the timing advance command, downlink control information DCI that carries the timing advance command TAC.

The transceiver unit is configured to receive, based on the DCI and the timing advance command sending period, the TAC periodically delivered by the network device.

The processing unit is configured to determine the TA of the terminal device based on the TAC.

With reference to the third aspect, in a possible implementation, the RRC Release message or the paging message further includes time-frequency resource configuration information of a sounding reference signal.

Optionally, the time-frequency resource configuration information of the sounding reference signal may include an SRS type, for example, a periodic SRS, an aperiodic SRS, and a semi-persistent SRS. The time-frequency resource configuration information of the sounding reference signal may alternatively include frequency domain location information, and an RE pattern related parameter, including a comb offset, a cyclic shift, and the like. The time-frequency resource configuration information of the sounding reference signal may alternatively include resource mapping information, including an SRS time domain location, a start location, a quantity of symbols, and the like. This application sets no specific limitation thereto.

With reference to the third aspect, in a possible implementation, the transceiver unit is further configured to send a sounding reference signal SRS to the network device based on the time-frequency resource configuration information of the sounding reference signal.

With reference to the third aspect, in a possible implementation, the SRS is used to assist in positioning of the terminal device in the non-connected state.

According to a fourth aspect, this application provides a network device, configured to perform the method in any possible implementation of the second aspect. The network device may be the network device in any possible implementation of the second aspect, or a module applied to the network device, such as a chip or a chip system. The network device includes a module, a unit, a means (means), or the like corresponding to the method performed by the network device in any possible implementation of the second aspect. The module, the unit, or the means may be implemented by using hardware, software, or hardware executing corresponding software. The hardware or software includes one or more modules or units corresponding to a function performed by the network device in any possible implementation of the second aspect.

The network device includes:

a transceiver unit, configured to send first indication information to a terminal device in a non-connected state, where the first indication information includes one or more pieces of the following information:

a radio network temporary identifier of a timing advance command, a timing advance command sending period, timing advance command duration, and a timing advance command reception window; and
the first indication information is used by the terminal device to determine a TA of the terminal device in the non-connected state; and
a processing unit, configured to perform processing by using the transceiver unit.

With reference to the fourth aspect, in a possible implementation, the transceiver unit is further configured to send second indication information to the terminal device in the non-connected state, where the second indication information is used to indicate a candidate time-frequency location of a physical downlink control channel PDCCH.

With reference to the fourth aspect, in a possible implementation, the first indication information is carried in an RRC Release message or a paging message.

With reference to the fourth aspect, in a possible implementation, the second indication information is carried in the RRC Release message or the paging message.

With reference to the fourth aspect, in a possible implementation, the second indication information includes a control resource set identifier and a search space identifier.

With reference to the fourth aspect, in a possible implementation, the transceiver unit is configured to periodically send a timing advance command TAC.

With reference to the fourth aspect, in a possible implementation, the RRC Release message or the paging message further includes time-frequency resource configuration information of a sounding reference signal.

With reference to the fourth aspect, in a possible implementation, the transceiver unit is configured to receive a sounding reference signal SRS sent by the terminal device in the non-connected state.

The processing unit is configured to perform related measurement on the SRS, to obtain a measurement result, where the measurement result is used to assist in positioning of the terminal device in the non-connected state.

For technical effects brought by any implementation of the third aspect and the fourth aspect, refer to technical effects brought by different implementations of the first aspect. Details are not described herein again.

According to a fifth aspect, an apparatus is provided. The apparatus includes: a processor, configured to execute a program stored in a memory. When the program is executed, the apparatus performs the method in the first aspect or the second aspect and any possible implementation of the first aspect or the second aspect.

With reference to the fifth aspect, in a possible implementation, the memory is disposed outside the apparatus.

According to a sixth aspect, a computer-readable storage medium is provided. The computer-readable storage medium stores a computer program, and when the computer program is executed by a computer, the first aspect or the second aspect and any possible implementation of the first aspect or the second aspect are performed.

According to a seventh aspect, a computer program product is provided. The computer program product includes a computer program, and when the computer program product runs on a computer, the first aspect or the second aspect and any possible implementation of the first aspect or the second aspect are performed.

According to an eighth aspect, a chip system is provided. The chip system includes at least one processor and an interface. The at least one processor is coupled to a memory by using the interface, and when the at least one processor executes a computer program or computer-executable instructions in the memory, the first aspect or the second aspect and any possible implementation of the first aspect or the second aspect are performed.

According to a ninth aspect, a system is provided. The system includes a terminal device and a network device, the terminal device is configured to perform the first aspect or any possible implementation of the first aspect, and the network device is configured to perform the second aspect or any possible implementation of the second aspect.

For beneficial effects of the apparatus embodiments according to the fifth aspect to the ninth aspect, refer to the beneficial effects of the corresponding methods in the first aspect or the second aspect and any possible implementation of the first aspect or the second aspect. Details are not described herein again.

**BRIEF DESCRIPTION OF DRAWINGS**

To describe the technical solutions in embodiments of this application or in the conventional technology more clearly, the following briefly describes the accompanying drawings for describing embodiments.

FIG. 1A is a schematic diagram of an architecture of a positioning system using a terminal positioning method according to an embodiment of this application;

FIG. 1B is a schematic diagram of an architecture of a positioning system using a terminal positioning method according to an embodiment of this application;

FIG. 1C is a schematic diagram of an architecture of another positioning system using a positioning method according to an embodiment of this application;

FIG. 2 is a schematic diagram of an uplink-downlink timing relationship;

FIG. 3 is a schematic flowchart of determining a timing advance TA;

FIG. 4 is a schematic flowchart of a positioning method 300 according to an embodiment of this application;

FIG. 5A and FIG. 5B are a schematic flowchart of a positioning method 400 according to an embodiment of this application;

FIG. 6 is a schematic diagram of a structure of an apparatus 600 according to an embodiment of this application;

FIG. 7 is a schematic diagram of a simplified structure of a terminal 700 according to an embodiment of this application;

FIG. 8 is a schematic diagram of a structure of an apparatus 800 according to an embodiment of this application; and

FIG. 9 is a schematic diagram of a simplified structure of a network device 900 according to an embodiment of this application.

**DESCRIPTION OF EMBODIMENTS**

The following describes in detail technical solutions of this application with reference to the accompanying drawings.

The technical solutions in embodiments of this application may be applied to a plurality of communication systems, for example, a long term evolution (long term evolution, LTE) system, an LTE frequency division duplex (frequency division duplex, FDD) system, an LTE time division duplex (time division duplex, TDD) system, a 5th generation (5th generation, 5G) system, new radio (new radio, NR), or a next-generation communication system, such as a 6G system. A 5G mobile communication system involved in this application includes a non-standalone (non-standalone, NSA) 5G mobile communication system or a standalone (standalone, SA) 5G mobile communication system. The technical solutions provided in this application may further be applied to a future communication system, such as a sixth generation mobile communication system. The communication system may further be a public land mobile network (public land mobile network, PLMN) network, a device-to-device (device-to-device, D2D) communication system, a machine-to-machine (machine to machine, M2M) communication system, Internet of Things (Internet of Things, IoT), an Internet of Vehicles communication system, or another communication system.

A terminal device in embodiments of this application may be user equipment, an access terminal, a subscriber unit, a subscriber station, a mobile station, a mobile console, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this application.

As an example but not a limitation, in embodiments of this application, a terminal may be a mobile phone, a tablet computer, a computer with wireless sending and receiving functions, a virtual reality terminal device, an augmented reality terminal device, a wireless terminal in industrial control, a wireless terminal in self-driving, a wireless terminal in remote medical surgery, a wireless terminal in a smart grid, a wireless terminal in transportation safety, a wireless terminal in a smart city, a wireless terminal in a smart home, or the like.

As an example but not a limitation, in embodiments of this application, a wearable device may also be referred to as a wearable intelligent device, and is a general name of a device that can be worn and that is intelligently designed and developed based on daily wear by using a wearable technology, such as glasses, gloves, watches, clothing, and shoes. The wearable device is a portable device that is directly worn on a body or integrated into clothes or an accessory of a user. The wearable device is not merely a hardware device, but is used to implement a powerful function through software support, data interaction, and cloud interaction. In a broad sense, wearable intelligent devices include full-featured and large-sized devices that can implement complete or partial functions without depending on smartphones, such as smart watches or smart glasses, and devices that focus on only one type of application function and need to work with other devices such as smartphones, such as various smart bands or smart jewelry for monitoring physical signs.

In addition, in embodiments of this application, the terminal device may further be a terminal device in an IoT system. IoT is an important part of future information technology development. A main technical feature of IoT is that a thing is connected to a network by using a communication technology, to implement an intelligent network of man-machine interconnection and thing-thing interconnection. In embodiments of this application, an IoT technology may achieve massive connection, deep coverage, and power saving on a terminal by using, for example, a narrow band (narrow band, NB) technology.

In embodiments of this application, a network device may be any communication device that is configured to communicate with the terminal and has wireless sending and receiving functions. The network device includes but is not limited to an evolved NodeB (evolved node B, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. The network device may alternatively be a gNB, a TRP, or a TP in a 5G system, or one or a group (including a plurality of antenna panels) of antenna panels of a base station in the 5G system. In addition, the network device may alternatively be a network node that forms the gNB or the TP, such as a BBU or a distributed unit (distributed unit, DU).

In some deployment, the gNB may include a central unit (central unit, CU) and the DU. In addition, the gNB may further include an active antenna unit (active antenna unit, AAU). The CU implements some functions of the gNB, and the DU implements some functions of the gNB. For example, the CU is responsible for processing a non-real-time protocol and service, and implementing functions at a radio resource control (radio resource control, RRC) layer and a packet data convergence protocol (packet data convergence protocol, PDCP) layer. The DU is responsible for processing a protocol at a physical layer and a real-time service, and implementing functions at a radio link control (radio link control, RLC) layer, a media access control (media access control, MAC) layer, and the physical layer (physical layer, PHY) layer. The AAU implements some physical layer processing functions, radio frequency processing, and a function related to an active antenna. Information at the RRC layer eventually becomes information at the PHY layer, or is converted from the information at the PHY layer. Therefore, in the architecture, higher layer signaling such as RRC layer signaling may also be considered as being sent by the DU or sent by the DU and the AAU. It may be understood that the network device may be a device including one or more of a CU node, a DU node, and an AAU node.

Optionally, in embodiments of this application, the network device and the terminal may communicate by using a licensed spectrum, may communicate by using an unlicensed spectrum, or may communicate by using both the licensed spectrum and the unlicensed spectrum. The network device and the terminal may communicate by using a spectrum less than 6 gigahertz (gigahertz, GHz), may communicate by using a spectrum greater than 6 GHz, or may communicate by simultaneously using the spectrum less than 6 GHz and the spectrum greater than 6 GHz. Embodiments of this application set no limitation on a spectrum resource used between the network device and the terminal device.

In addition, the technical solutions of this application may be applied to a scenario in which the terminal device needs to be positioned. For example, the technical solutions may be applied to a positioning scenario in which a technology of an observed time difference of arrival (observed time difference of arrival, OTDOA), an enhanced cell identifier (enhanced cell identifier, E-CID), a multi round-trip time (multi round-trip time, multi-RTT), a downlink angle of departure (Downlink Angle of Departure, DAOD), or an angle of arrival (Angle of Arrival, AOA) is used.

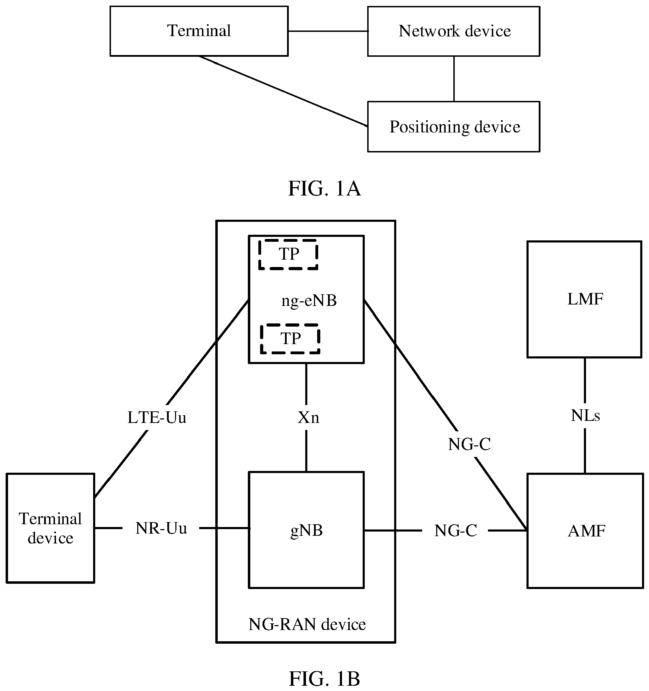

FIG. 1A is a schematic diagram of an architecture of a positioning system using a terminal positioning method according to an embodiment of this application. As shown in FIG. 1A, the positioning system includes a terminal, one or more network devices (one network device is used as an example in FIG. 1A), and a positioning device. The terminal, the network device, and the positioning device may mutually perform direct communication, or may perform communication through forwarding of another device. This is not specifically limited in this embodiment of this application. Although not shown, the positioning system may further include another network element, for example, a mobility management network element. This is not specifically limited in this embodiment of this application.

Optionally, the positioning device in this embodiment of this application may be a location management function (location management function, LMF) network element or a location management component (location management component, LMC) network element, or may be a local location management function (local location management function, LLMF) network element in the network device.

Optionally, the positioning system provided in this embodiment of this application may be applied to the foregoing various communication systems. The 5G mobile communication system is used as an example. A network element or an entity corresponding to the network device in FIG. 1A may be a next-generation radio access network (next-generation radio access network, NG-RAN) device in the 5G mobile communication system. A network element or an entity corresponding to the foregoing mobility management network element may be an access and mobility management function (access and mobility management function, AMF) network element in the 5G mobile communication system. This is not specifically limited in this embodiment of this application.

For example, FIG. 1B is a schematic diagram of an architecture of a positioning system using a positioning method according to an embodiment of this application. As shown in FIG. 1B, in the positioning system, the terminal is connected to a radio access network by using an LTE-Uu interface through a next-generation evolved NodeB (next-generation evolved NodeB, ng-eNB), or by using an NR-Uu interface through a next-generation node B (next-generation node B, gNB). The radio access network is connected to a core network by using an NG-C interface through an AMF network element. The NG-RAN includes one or more ng-eNBs (one ng-eNB is used as an example in FIG. 1B). The NG-RAN may alternatively include one or more gNBs (one gNB is used as an example in FIG. 1B). The NG-RAN may alternatively include one or more ng-eNBs and one or more gNBs. The ng-eNB is an LTE base station that accesses a 5G core network, and the gNB is a 5G base station that accesses the 5G core network. The core network includes the AMF network element and an LMF network element. The AMF network element is configured to implement a function such as access management, and the LMF network element is configured to implement a function such as positioning or positioning assistance. The AMF network element is connected to the LMF network element by using an NLs interface.

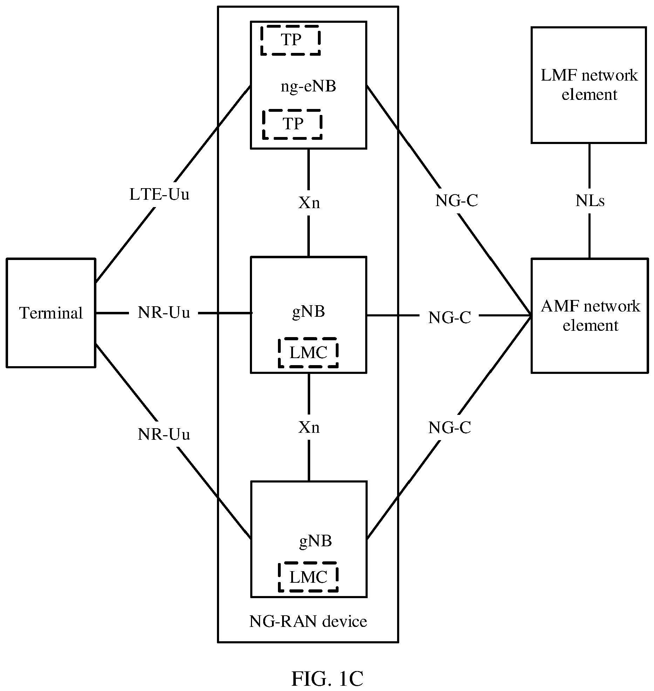

For example, FIG. 1C is a schematic diagram of an architecture of another positioning system that uses a positioning method in this embodiment of this application in a 5G mobile communication system. A difference between the architecture of the positioning system in FIG. 1C and that in FIG. 1B lies in that an apparatus or a component (for example, the LMF network element) of a location management function in FIG. 1B is deployed in the core network, and an apparatus or a component (for example, an LMC network element) of a location management function in FIG. 1C may be deployed in an NG-RAN device. As shown in FIG. 1C, the gNB includes the LMC network element. The LMC network element is a partial functional component of the LMF network element and can be integrated into the gNB of the NG-RAN device.

It should be understood that a device or a function node included in the foregoing positioning system in FIG. 1B or FIG. 1C is merely described as an example, and does not constitute a limitation on this embodiment of this application. Actually, the positioning system in FIG. 1B or FIG. 1C may further include another network element or device or function node that has an interactive relationship with the device or function node shown in the figure. This is not specifically limited herein.

For example, main functions of each functional entity in the location architecture applied to the 5G mobile communication system as shown in FIG. 1B or FIG. 1C are as follows:

(1) The LMF is responsible for supporting different types of location services related to a terminal device, including positioning of the terminal device, transmitting of auxiliary data to the terminal device, and the like. A control plane and a user plane of the LMF are respectively an enhanced serving mobile location center (enhanced serving mobile location center, E-SMLC) and a secure user plane location platform (secure user plane location platform, SLP). The LMF may perform the following information exchange with the ng-eNB or the gNB and the terminal device:

a. The LMF performs information exchange, for example, obtaining positioning reference signal (positioning reference signal, PRS) configuration information, channel sounding reference signal (sounding reference signal, SRS) configuration information, cell timing, and cell location information, with the ng-eNB or the gNB by using an NR positioning protocol annex (NR positioning protocol annex, NRPPa) message.
b. The LMF performs terminal device capability information transfer, auxiliary information transfer, measurement information transfer with the terminal device by using an LTE positioning protocol (LTE positioning protocol, LPP) message.

(2) The AMF may receive a location service request related to the terminal device from a third-party device such as a 5G core network (5G core network, 5GC) location services (location services, LCS) entity, or the AMF may start some location services on behalf of a specific terminal device, and forward a location service request to the LMF. After obtaining location information returned by the terminal device, the AMF returns the related location information to the third-party device or a function such as the 5GC LCS entity.
(3) The terminal device may measure a downlink signal from the NG-RAN device and another source to support positioning.
(4) The gNB or the ng-eNB may provide measurement information for a target terminal device, and convey this information to the LMF.

The following describes some nouns or terms used in this application.

I. Physical channel

A time-frequency resource that carries information of a higher layer (each layer above a physical layer) is referred to as a physical channel. A physical downlink channel involved in this application mainly includes:

(1) Physical downlink shared channel (Physical Downlink Shared Channel, PDSCH), which is a main body carrying service data, and may further carry some paging messages, some broadcast messages, uplink and downlink power control messages, and the like.
Data transmission is to place to-be-transmitted data on a corresponding time-frequency resource, and transmit the data by using an antenna, and then a receive end receives the data on a specific time-frequency resource. For downlink and uplink data transmission, data is respectively carried on a physical downlink shared channel and a physical uplink shared channel.
(2) Physical downlink control channel (Physical Downlink Control Channel, PDCCH) used for transmission of downlink control information (Downlink control information, DCI). The downlink control information DCI includes a scheduling decision required for receiving downlink data from a PDSCH and a scheduling grant that allows the terminal device to transmit uplink data by using a physical uplink shared channel (Physical Uplink Shared Channel, PUSCH). Information carried on the PDCCH includes a time-frequency resource location, a coding and modulation scheme, HARQ control information, and the like. The network device is a decision maker of uplink and downlink resource scheduling, and controls uplink and downlink data transmission by using the PDCCH. Specifically, the network device performs control by using a PDCCH format, so that the PDSCH and the PUSCH can transmit a plurality of types of data.
(3) Physical broadcast channel (Physical Broadcast Channel, PBCH) used for system information broadcast required by the terminal device to access a network.

II. Timing advance, timing advance command, and timing advance group

(1) Timing advance (Timing Advance, TA): A timing advance is usually used for uplink transmission of the terminal device. To enable an uplink data packet sent by the terminal device to arrive at the network device at a desired time, a transmission delay caused by a distance is estimated, and the data packet is sent in advance by a corresponding time.
(2) Timing advance command (Timing Advance Command, TAC): A timing advance command is used when the network device notifies the terminal device of specific content of the timing advance by sending the TAC to the terminal device.
(3) Timing advance group (Timing Advance Group, TAG): One TAG may include one or more serving cells with a same TA value. If the TAG includes a primary cell, the TAG is referred to as a primary timing advance group. If only a secondary cell is included, the TAG is referred to as a secondary timing advance group.

III. Calculation of a TA

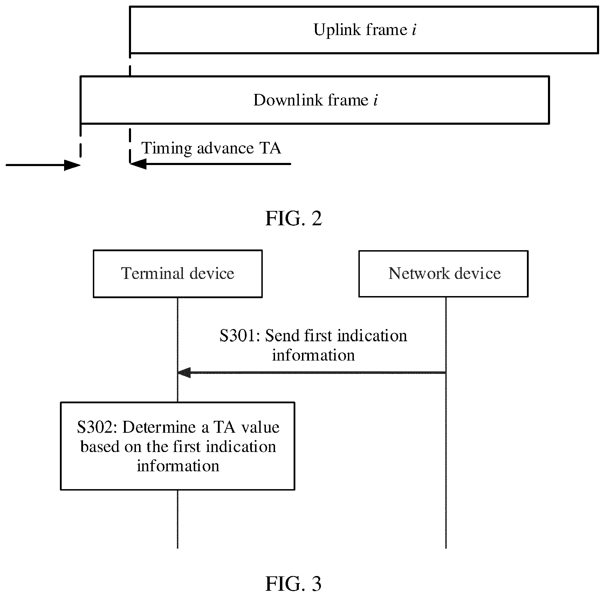

A timing relationship between an uplink and a downlink is shown in FIG. 2, and a timing advance TA can be calculated by using $T_{TA} = (N_{TA} + N_{TA,offset})T_c$. $T_{TA}$ is an actual timing advance, and is in a unit of second (s). $N_{TA}$ is a timing advance without offset calibration, and is in a unit of a basic time unit of NR: $T_c$, $T_c = 1/(480 * 1000 * 4096)$. $T_c$ is related to a maximum subcarrier spacing and a quantity of sampling points, and is about 0.509 nanoseconds (ns). $N_{TA}$ is related to a subcarrier spacing, and the subcarrier spacing depends on first uplink transmission after a random access response (Random Access Response, RAR) message is received, that is, a subcarrier spacing of Msg3. $N_{TA}$ can be parsed from the TAC. $N_{TA,offset}$ is a timing advance offset value, and is a fixed value that varies based on different frequency bands and subcarrier spacings. The value is notified by a serving network device to the terminal device by using an n-TimingAdvanceOffset parameter. A special case exists in which when msgA is transmitted on the PUSCH, $T_{TA} = 0$.

IV. Notification and updating of the TA

Notification and updating of the TA are mainly divided into the following two cases:

1. In a random access process, the network device notifies the terminal device of the TA by using a TAC field in an RAR message.

When the terminal device accesses a network by using the random access process, the network device determines a TA value by measuring a received random access preamble (Preamble), and sends the TA value to the terminal device by using a TAC in the RAR message. The terminal device obtains an initial TA in random access, and this process is an "initial uplink synchronization process".

2. In an RRC_CONNECTED state, the network device sends the TA to the terminal device by using a MAC CE message.

Although the terminal device completes timing advance in the random access process, a location of the terminal device may change with time, and a possible reason is as follows:

(1) A transmission delay between the network device and a terminal device in high-speed movement, for example, a terminal device on a high-speed railway, is constantly changed.
(2) A current transmission path disappears and a new transmission path is switched to. For example, in a city with dense buildings, this is likely to happen when one walks to a corner of a building.
(3) An uplink timing error may be caused due to long-time offset accumulation of a crystal oscillator offset of the terminal device.
(4) A Doppler frequency shift is caused because the terminal device moves.

Therefore, the terminal device needs to continuously update an uplink timing advance of the terminal device to maintain uplink synchronization. The network device uses a closed-loop mechanism to adjust the TA. The network device determines a TA value of a corresponding terminal device by measuring uplink transmission of the terminal device. Therefore, as long as the terminal device has uplink transmission, the network device can use uplink transmission to estimate the TA value.

V. Resource element group and control channel element

A PDCCH is finally mapped to a resource block (Resource Block, RB). However, one PDCCH occupies a relatively large quantity of RBs. It is not convenient to describe, by using the RB, a resource occupied by the PDCCH, and concepts of a resource element group (Resource Element Group, REG) and a control channel element (Control Channel Element, CCE) emerge.

(1) REG

An REG is a physical resource unit that occupies one OFDM symbol in time domain, and occupies one resource block (including 12 REs consecutive in frequency domain) in frequency domain. In one REG, three REs are used to map a PDCCH reference signal, and nine REs are used to map downlink control information (Downlink Control Information, DCI).

(2) CCE

On a PDCCH, a basic unit that carries the DCI is a CCE, and the CCE occupies six REGs in frequency domain. One PDCCH is formed by n CCEs, where n is referred to as an aggregation level (Aggregation level). A correspondence between a possible value of n and a quantity of CCEs included in the aggregation level is shown in Table 1.

Table 1

| Aggregation level | Quantity of CCEs |
|---|---|
| 1 | 1 |
| 2 | 2 |
| 4 | 4 |
| 8 | 8 |
| 16 | 16 |

VI. Radio network temporary identifier and downlink control information

(1) A radio network temporary identifier (Radio Network Temporary Identifier, RNTI) is used by a higher layer to tell a physical layer what control information needs to be received or sent. The RNTI may be represented as an X-RNTI based on different control messages. PDCCH information of different terminals is distinguished by using corresponding RNTI information, that is, cyclic redundancy check (Cyclic Redundancy Check, CRC) of DCI of PDCCHs of different terminals is scrambled by using the RNTI. When receiving information, the terminal device performs CRC check with the CCE by using a corresponding RNTI for different information. If the CRC check succeeds, the terminal device learns that this information is required by the terminal device, and further decodes content of the DCI based on a modulation and coding scheme.

(2) Downlink control information (Downlink Control Information, DCI) includes uplink resource scheduling information, downlink resource scheduling information, and uplink power control information. Each terminal device can see only one piece of DCI in each subframe. Different DCI formats are defined based on different directions of scheduling information, types of scheduling information, multiple input multiple output (Multi Input Multi Output, MIMO) transmission modes, and resource indication manners.

VII. PDCCH blind detection

When downlink data transmission is considered, data sent by the network device to a user is carried on a PDSCH, but related scheduling information (that is, the DCI, used to indicate which time-frequency resource of the PDSCH carries the data) is transmitted on a PDCCH. Therefore, to receive the data transmitted on the PDSCH, the user needs to first decode the PDCCH. In the downlink, the terminal device usually monitors the PDCCH once in each timeslot. When a valid PDCCH is detected, the terminal device receives a data unit on the PDSCH based on a scheduling decision of the network device, and the data unit is also referred to as a transport block (Transport Block, TB).

Generally, the network device simultaneously sends the PDCCH to a plurality of terminal devices. To ensure that control information belonging to the terminal device is received, the terminal device needs to continuously detect downlink PDCCH scheduling information. Before detection, the terminal device does not know what information is transmitted by the PDCCH and what format is used. However, the terminal device knows what information is currently expected. For example, information expected by a terminal device in an RRC_IDLE state, is a paging (paging) message and system information (System Information, SI). When there is uplink data waiting to be sent, an uplink grant (Uplink Grant, UL Grant) is expected. The terminal device performs CRC check with CCE information by using a corresponding X-RNTI for different expected information. If the CRC check succeeds, the terminal device knows that this information is required, and also knows a corresponding DCI format and a modulation scheme, to further demodulate DCI content. This is a blind detection process of the PDCCH.

VIII. RRC_IDLE state, RRC_INACTIVE state, and RRC_CONNECTED state

5G NR supports three RRC states, including an idle state RRC_IDLE, a deactivated state RRC_INACTIVE, and a connected state RRC_CONNECTED. The idle state RRC_IDLE and the deactivated state RRC_INACTIVE are referred to as non-connected states. When the terminal device is in different states, different features exist:

(1) When the terminal device is in the RRC_IDLE state, a feature is that the terminal device does not reserve an RRC context. The RRC context is a key parameter for establishing communication between the terminal device and a network, and specifically includes a security context, terminal device capability information, and the like. This also means that the terminal device has not established a connection to a next-generation core network (Next Generation Core, NGC), that is, is in a core network idle CN_IDLE state. In this case, the terminal device does not have to-be-transmitted data, the terminal device enters a sleep (Sleep) state, and disables a transceiver unit to reduce power consumption. A terminal device in an idle state only periodically wakes up to receive a possible paging message, that is, does not continuously receive the paging message.

(2) When the terminal device is in the RRC_INACTIVE state, the RRC context is reserved between the terminal device and the network, and the terminal device and the core network are also in a CN_CONNECTED state. In this case, a process of switching to the connected state for data receiving is relatively fast, and no additional core network signaling overhead needs to be generated. In addition, the terminal device in the RRC_INACTIVE state also enters the sleep state. Therefore, the RRC_INACTIVE state can meet requirements of reducing a connection delay, reducing signaling overheads, and reducing power consumption.

(3) When the terminal device is in the RRC_CONNECTED state, the terminal device has established the RRC context, all parameters necessary for establishing communication between the terminal device and the network are known to both communication parties, the network allocates a C-RNTI to the accessed terminal device, and the terminal device and the core network are in the CN_CONNECTED state. In this case, the terminal device is in a continuous receiving state if the terminal device is transmitting data, and when data transmission is completed and the terminal device enters a waiting state, the terminal device switches to a connected state of discontinuous reception (Discontinuous Reception, DRX), to reduce power consumption. If there is still data to be subsequently transmitted, the terminal device returns to the continuous receiving state again. In this case, because the RRC context has been established, a switching time required for the terminal device to leave the connected state of DRX and prepare for continuous reception is much shorter than a time required for switching from the idle state to the connected state.

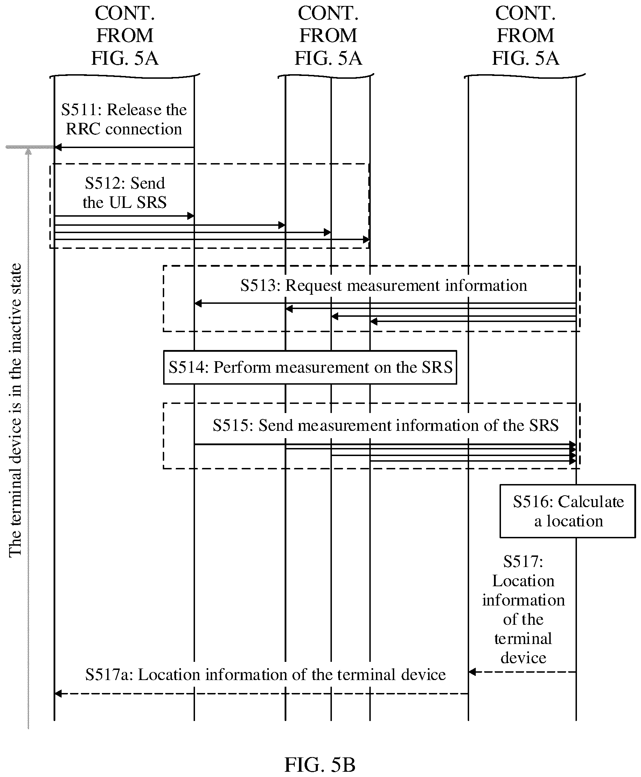

The following specifically describes a method for determining a TA provided in an embodiment of this application with reference to FIG. 3 to FIG. 5A and FIG. 5B.

It should be noted that names of messages between devices, names of parameters in the messages, or the like in the following embodiments of this application are merely examples, and there may be other names during specific implementation. This is not specifically limited in embodiments of this application.

FIG. 3 is a schematic flowchart of a method 300 for determining a timing advance TA according to an embodiment of this application. The method 300 includes:

S301: A terminal device in a non-connected state receives first indication information from a network device, where the first indication information includes one or more pieces of the following information: a radio network temporary identifier of a timing advance command, a timing advance command sending period, timing advance command duration, and a timing advance command reception window.

S302: The terminal device determines a TA of the terminal device in the non-connected state based on the first indication information.

In this embodiment of this application, the first indication information is provided for the terminal device, so that the terminal device in the non-connected state is enabled to determine the timing advance TA based on the first indication information, and further send uplink data to the network device based on a determined TA value. In this process, the terminal device is in the non-connected state, so that power consumption of the terminal device can be reduced.

Specifically, the terminal device in the non-connected state may determine the timing advance TA in the following manner.

In a possible implementation, the first indication information includes the radio network temporary identifier of the timing advance command, the timing advance command sending period, and the timing advance command duration. The terminal device in the non-connected state performs blind detection on downlink control information DCI on a PDCCH by using the radio network temporary identifier of the timing advance command. For example, the radio network temporary identifier of the timing advance command may be a TAC-RNTI. Specifically, the terminal device performs, by using the radio network temporary identifier of the timing advance command, CRC check with a basic unit CCE that carries the DCI and that is in the PDCCH. If the CRC check succeeds, the information is required by the terminal device, and the terminal device further demodulates content of the DCI based on a modulation and coding scheme. The terminal device in the non-connected state determines, based on the content of the DCI, a time-frequency resource block corresponding to downlink data transmitted on a physical downlink shared channel PDSCH, further determines a sending time interval of the timing advance command TAC based on the timing advance command sending period in the first indication information, and further monitors, on the time-frequency resource, a timing advance command TAC periodically delivered by the network device. The terminal device in the non-connected state reserves time based on the timing advance command duration (or based on the timing advance command reception window) in the first indication information, to monitor the periodically delivered TAC.

For example, the terminal device obtains a related parameter for TA calculation $N_{TA}$ from the TAC, and the timing advance TA may be obtained through calculation by using the following formula:

$$T_{TA} = (N_{TA} + N_{TA,offset})T_c$$

$T_{TA}$ is an actual timing advance, and is in a unit of second (s). $N_{TA}$ is a timing advance without offset calibration, and is in a unit of a basic time unit of NR: $T_c$. $N_{TA}$ is related to a subcarrier spacing, and the subcarrier spacing depends on first uplink transmission after a random access response RAR message is received, that is, a subcarrier spacing of Msg3. $N_{TA}$ can be parsed from the TAC. $N_{TA,offset}$ is a timing advance offset value, and is usually a fixed value that is determined by using a frequency band and a subcarrier spacing. The value is notified by a serving network device to a terminal device in a connected state by using an n-TimingAdvanceOffset parameter. When the terminal device enters the non-connected state, the value still remains. A special case exists in which when msgA is transmitted on the PUSCH, $T_{TA} = 0$.

It should be understood that the TA may alternatively be calculated by using another TA formula, and the foregoing formula is only a possible example.

It should be understood that, in the foregoing several embodiments, the network device periodically delivers the TAC, and the terminal device calculates a TA value in a current period based on a TAC obtained through monitoring in the current period, and overwrites a TA value obtained through calculation in a previous period, to implement updating of the TA.

It should be noted that, in the foregoing several embodiments, the timing advance command duration in the first indication information may be further replaced with a start time and an end time of the timing advance command. In the foregoing several embodiments, the timing advance command reception window in the first indication information may further be replaced with a start location and an end location of a timing advance command window.

Optionally, the terminal device receives second indication information from the network device, where the second indication information is used to indicate a candidate time-frequency location of a physical downlink control channel PDCCH.

Optionally, the second indication information includes a control resource set identifier and a search space identifier.

It should be understood that a control resource set (Control-Resource Set, CORESET) is used to carry information such as a frequency band occupied by the PDCCH in frequency domain and a quantity of OFDM symbols occupied in time domain. The CORESET includes a plurality of physical resource blocks (Physical Resource Block, PRB) in frequency domain, and includes one to three OFDM symbols in time domain. A time-frequency resource occupied by the CORESET is configured by a ControlResourceSet IE at an RRC layer.

A search space (Search Space) carries time domain configuration information, and the time domain configuration information includes a detection period, a timeslot offset, a timeslot quantity, a symbol location, and a control resource set index. In NR, a maximum of 10 search space sets are configured in each downlink bandwidth part (Band Width Part, BWP) in a serving cell, and each search space set includes search spaces of one or more aggregation levels. One CORESET can be bound to a plurality of search spaces, but one search space can be bound to only one CORESET.

In a possible implementation, the second indication information includes the control resource set identifier and the search space identifier. For example, the control resource set identifier and the search space identifier may be a combination of CORESET0 and SearchSpace0. Specifically, the terminal device determines the candidate time-frequency location of the PDCCH based on the control resource set identifier CORESET ID and the search space identifier Search Space ID. Further, the terminal device performs blind detection on the DCI at the candidate time-frequency location of the PDCCH based on the radio network temporary identifier of the timing advance command in the first indication information. For example, the radio network temporary identifier of the timing advance command may be a TAC-RNTI. Specifically, the terminal device performs CRC check with the CCE by using the radio network temporary identifier of the timing advance command. If the CRC check succeeds, the information is required by the terminal device, and the terminal device further demodulates the content of the DCI based on the modulation and coding scheme. The terminal device in the non-connected state determines, based on the content of the DCI, a time-frequency resource block corresponding to downlink data transmitted on the physical downlink shared channel PDSCH, further determines the sending time interval of the TAC based on the timing advance command sending period in the first indication information, and further monitors, on the time-frequency resource, the TAC periodically delivered by the network device. The terminal device in the non-connected state reserves time based on the timing advance command duration in the first indication information, to monitor the periodically delivered TAC. Specifically, the terminal device obtains a related parameter for TA calculation $N_{TA}$ from the TAC. For a calculation process of the timing advance TA, refer to the foregoing embodiments. Details are not described herein again in this embodiment.

In the foregoing implementation, the terminal device determines the candidate time-frequency location of the PDCCH based on the second indication information, and performs blind detection at the candidate time-frequency location of the PDCCH, to avoid performing blind detection at all time-frequency locations of the PDCCH, so that blind detection complexity is reduced, and blind detection efficiency is improved.

Optionally, the first indication information may be carried in an RRC Release message or a paging message.

Optionally, the second indication information may also be carried in the RRC Release message or the paging message.

For example, the first indication information and the second indication information may be added to an information element SuspendConfig field of the RRC Release message. For example, one or more pieces of the following information may be added to the information element SuspendConfig field: a TAC-RNTI, a TAC period, TAC duration, a reception window, SRS-config, controlResourceSetId, and searchSpaceId. An information element SuspendConfig field parameter after indication information is added may be represented as follows:

```
SuspendConfig::=SEQUENCE{

        fullI-RNTI              I-RNTI-Value,

        shortI-RNTI             ShortI-RNTI-Value,

        ran-PagingCycle          PagingCycle,

        ran-NotificationAreaInfo   RAN-NotificationAreaInfo       OPTIONAL, -- Need M

        t380                     PeriodicRNAU-TimerValue        OPTIONAL, -- Need R

        nextHopChainingCount     NextHopChainingCount,

        tac-RNTI                 TAC-RNTI-Value                OPTIONAL, -- Need R

        tac-Period           TAC-Period                        OPTIONAL, -- Need R

        tac-Duration/tac-ReceptionWindow TAC-Duration/TAC-ReceptionWindow     OPTIONAL,      --
Need R

        srs-config               SRS-config                    OPTIONAL, -- Need R

        controlResourceSetId      ControlResourceSetId         OPTIONAL, -- Need R

        searchSpaceId            searchSpaceId                 OPTIONAL, -- Need R

        ...

        }
```

Specific descriptions of newly added indication information are shown in Table 2.

**Table 2**

| RRCRelease-IEs field descriptions |
|---|
| TAC-RNTI<br>Indication of TAC in downlink (Indication of TA Commands in DL) |
| TAC period<br>Indicates TAC period (Indicates TA Command transmission period) |
| TAC duration/Reception window<br>Indicates the TAC reception window or the TAC duration (Indicates the duration time of TA Command duration/ Indicates the reception window for TA Commands) |
| SRS-config<br>Indicates SRS configuration information (Indicates the configuration for positioning SRS) |
| controlResourceSetId (optional)<br>Indicates the control resource set ID of the PDCCH that schedules the PDSCH carrying TACs (Indicates the control resource set ID of the PDCCH that schedules the PDSCH carrying TA Commands) |
| searchSpaceId (optional)<br>Indicates the search space ID of the PDCCH that schedules the PDSCH carrying TACs (Indicates the search space ID of the PDCCH that schedules the PDSCH carrying TA Commands) |

Optionally, the RRC Release message or the paging message further includes time-frequency resource configuration information of a sounding reference signal.

It should be noted that the time-frequency resource configuration information of the sounding reference signal may include an SRS type, for example, a periodic SRS, an aperiodic SRS, and a semi-persistent SRS. The time-frequency resource configuration information of the sounding reference signal may alternatively include frequency domain location information and an RE pattern related parameter, including a comb size, a cyclic shift, and the like. The time-frequency resource configuration information of the sounding reference signal may alternatively include resource mapping information, including an SRS time domain location, a start location, a quantity of symbols, and the like. This application sets no specific limitation thereto.

The method for determining the TA in the non-connected state in the foregoing embodiment may be applied to a positioning scenario of the terminal device in the non-connected state. For example, the terminal device sends a sounding reference signal SRS to the network device based on the time-frequency resource configuration information of the sounding reference signal. The SRS is used to assist in positioning of the terminal device in the non-connected state. Similarly, the method for determining the TA in the non-connected state provided in this embodiment of this application may also be applied to another scenario. This application sets no specific limitation thereto.

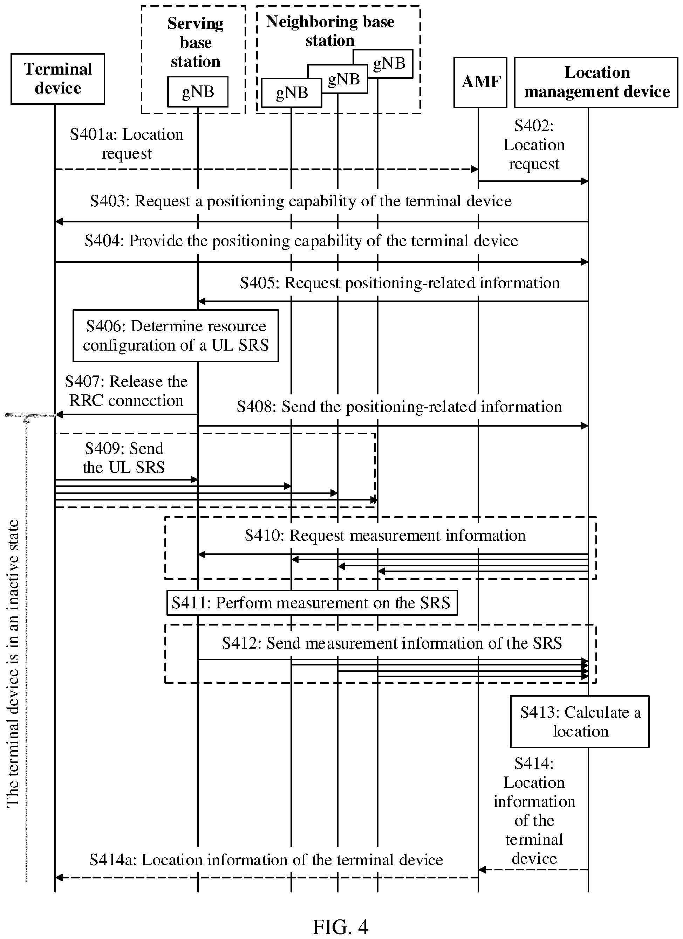

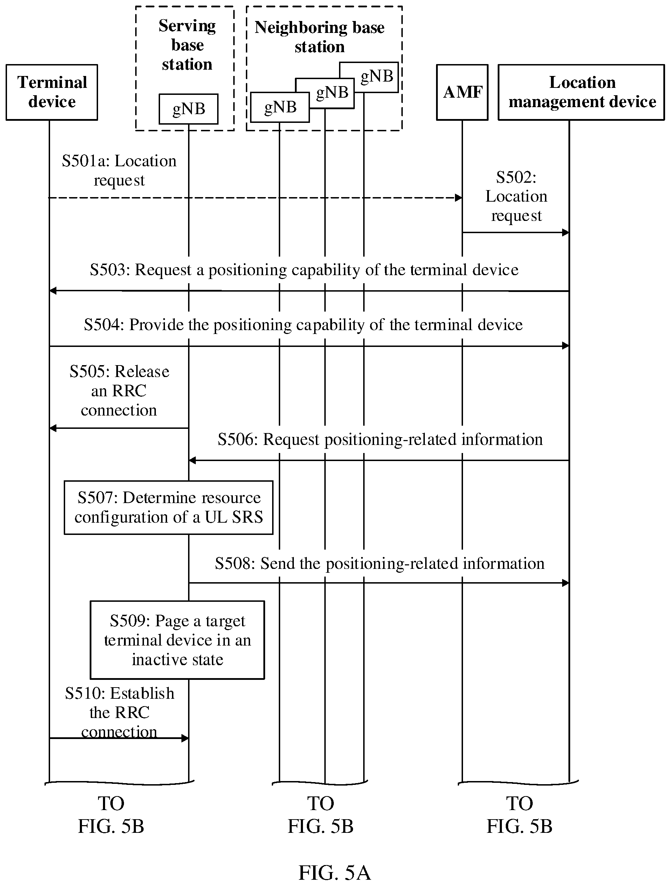

For example, the following describes in detail the method for determining the TA in this application applied to the positioning scenario with reference to FIG. 4 and FIG. 5A and FIG. 5B.

FIG. 4 is a schematic flowchart of a terminal positioning method 400 according to an embodiment of this application. In FIG. 4, an example in which a serving base station (for example, a gNB) and a neighboring base station (for example, a gNB) are used as network devices is used for description. The method 400 includes at least the following steps.

In this embodiment of this application, a positioning procedure may be initiated by using the following step: S401a, S401b, S401c, or S401d.

S401a: A terminal device in a connected state sends a location request to an access and mobility management device. Correspondingly, the access and mobility management device receives the location request from the terminal device in the connected state. The location request is used to request to position the terminal device.

That is, the terminal device may actively initiate the procedure of positioning the terminal device. This step is applicable to a positioning scenario of a terminal originated location request (Mobile Originated Location Request, MO-LR).

S401b: A third-party device or a function sends a location request to an access and mobility management device. Correspondingly, the access and mobility management device receives the location request from the third-party device or the function. The location request is used to request to position a terminal device.

That is, the third-party device or the function may initiate the procedure of positioning the terminal device. This step is applicable to a positioning scenario of a terminal terminated location request (Mobile Terminated Location Request, MT-LR).

Optionally, the third-party device or the function may be a 5G core network (5G core, 5GC) location services (location services, LCS) entity, an LCS client, an internal/external application function of a serving PLMN, or the like. For example, the 5GC LCS entity in this embodiment of this application may be, for example, a gateway mobile location center (gateway mobile location center, GMLC).

S401c: An access and mobility management device determines some location service requirements (for example, a terminal device needs an emergency call) of the terminal device, and triggers a location request.

That is, the access and mobility management device may initiate the procedure of positioning the terminal device. This step is applicable to the foregoing positioning scenario of a network induced location request (Network Induced Location Request, NI-LR).

S401d: A network device sends a location request to an LMC by using internal signaling. Correspondingly, the LMC receives the location request from the network device. The location request is used to request to position a terminal device.

That is, the network device may initiate the procedure of positioning the terminal device. This step is applicable to the foregoing scenario of a radio access network induced location request (RAN Induced Location Request, RI-LR).

It should be understood that the foregoing provides only examples of several manners of initiating the positioning procedure, and there may be another manner of initiating the positioning procedure. This is not specifically limited in this embodiment of this application. In FIG. 4, an example in which a terminal device initiates a positioning procedure is used for description.

Further, the positioning method provided in this embodiment of this application further includes the following steps S402 to S412.

S402: The access and mobility management device sends the location request to a location management device. Correspondingly, the location management device receives the location request from the access and mobility management device. The location request is used to request to position the terminal device.

The location request sent by the access and mobility management device to the location management device may be the location request in step S401a, S401b, or S401c.

S403: The location management device sends a first request message to the terminal device in the connected state. Correspondingly, the terminal device receives the first request message from the location management device. The first request message is used to request a positioning capability of the terminal device.

Optionally, the first request message may be carried in an LTE positioning protocol (LTE positioning protocol, LPP) message, that is, the location management device may request the positioning capability from the terminal device by using the LPP message.

S404: The terminal device in the connected state sends a first response message to the location management device. Correspondingly, the location management device receives the first response message from the terminal device. The first response message carries or includes the positioning capability of the terminal device.

Optionally, the first response message may be carried in an LPP message, that is, the terminal device may send the positioning capability of the terminal device to the location management device by using the LPP message.

Optionally, different from the manner of obtaining the positioning capability of the terminal device in steps S403 and S404, in this embodiment of this application, the terminal device may actively send its supported positioning capability to the location management device without a request. That is, when the positioning method provided in this embodiment is performed, step S404 may be omitted. This is not specifically limited in this embodiment of this application.

S405: The location management device sends a second request message to the network device. Correspondingly, the network device receives the second request message from the location management device. The second request message is used to request positioning-related information. For example, the positioning-related information may be SRS configuration information.

Optionally, the second request message may be carried in an NR positioning protocol (NR positioning protocol annex, NRPPa) message. That is, the location management device may request the positioning-related information from the network device by using the NRPPa message.

S406: The network device determines a related configuration of an uplink sounding signal.

For example, related configuration information of the uplink sounding reference signal (Uplink Sounding Reference Signal, UL SRS) may include an SRS type, for example, a periodic SRS, an aperiodic SRS, and a semi-persistent SRS. The related configuration information of the uplink sounding reference signal may alternatively include an RE pattern related-parameter, including a comb size, a cyclic shift, and the like. The related configuration information of the uplink sounding reference signal may alternatively include resource mapping information, including a start symbol location, a quantity of symbols, and the like. This application sets no specific limitation thereto.

S407: The network device releases an RRC connection of the terminal device, and the terminal device enters an RRC_INACTIVE state.

In a possible implementation, the network device carries first indication information in an RRC Release message, or the network device carries the first indication information in a paging message when paging a to-be-positioned terminal device, where the first indication information is used to determine a TA value of the terminal device in the RRC_INACTIVE state. Optionally, the first indication information includes one or more pieces of the following information: a radio network temporary identifier of a timing advance command, a timing advance command sending period, timing advance command duration, and a timing advance command reception window. Optionally, the RRC Release message or the paging message further carries the positioning-related information, for example, the SRS configuration information.

Specifically, for the method for determining a TA based on the first indication information, refer to the foregoing embodiment. Details are not described herein again in this application.

Optionally, the network device carries second indication information in the RRC Release message or the paging message, where the second indication information is used to indicate a candidate time-frequency location of a physical downlink control channel PDCCH. For example, the second indication information includes a control resource set identifier and a search space identifier.

Optionally, the network device may also use the RRC Release message to the send the first indication information to the terminal device, or send the first indication information and the second indication information to the terminal device.

S408: The network device sends a second response message to the location management device. Correspondingly, the location management device receives the second response message from the network device. The second response message carries or includes the positioning-related information provided by the network device for the location management device.

For example, the positioning-related information includes the SRS configuration information.

In addition, in this embodiment of this application, the positioning-related information provided by the network device for the location management device may further include location information and related configuration information of a network device (the ng-eNB or the gNB in FIG. 1B or FIG. 1C) participating in positioning in the network device, for example, a physical cell ID (physical cell IDs, PCIs), a global cell ID (global cell IDs, GCIs), PRS configuration information, a positioning reference signal resource ID (PRS Resource ID), geographical coordinates of a TRP, and timing information of a TRP. This is not limited in this application.

Optionally, the second response message may be carried in an NR positioning protocol (NR positioning protocol annex, NRPPa) message. That is, the network device may send positioning auxiliary data to the location management device by using the NRPPa message.

S409: The terminal device sends an SRS to the network device based on the TA value and the SRS configuration information.

The network device may be a serving base station or a neighboring cell positioning reference base station. The terminal device sends the SRS in a broadcast manner, and both the serving base station and the neighboring cell positioning reference base station receive the SRS.

It should be noted that, after step S407 is performed, it may take a period of time before the terminal device can send the SRS to the network device based on the TA value and the SRS configuration information, and the TA may have expired in this period of time. Therefore, in a possible implementation, after step S407 is performed and before step S409 is performed, if the TA is still valid, the terminal device may send the SRS to the network device based on the TA value and the SRS configuration information.

In another possible implementation, after step S407 is performed and before step S409 is performed, if the TA is expired, before step S409 is performed, the following step S408b further needs to be performed first to obtain an initial TA:

S408b: The terminal device initiates a random access process, obtains an initial TA by using a msg2 or msgB message, releases the RRC connection after receiving a msg4 or msgB message from the network device, and remains in a non-connected state.

Optionally, as described in the cases in steps S401b (NI-LR) and S401c (RI-LR), the network may page the terminal device by using a paging message, so that the network initiates the random access process. Optionally, as described in the case in step S401a in which the terminal device actively initiates the location request (MO-LR), the terminal device may also actively initiate random access. Specifically, the following two options may be included:

Option 1: Trigger, by using a paging message, UE to initiate an RACH and activate an SRS. For example, a paging cause (for example, positioning) is newly added.

Option 2: UE actively initiates an RACH and newly adds an RACH trigger condition (for example, positioning). Further, the terminal device starts to monitor the radio network temporary identifier of the timing advance command only after contention resolution (Contention Resolution) succeeds (that is, the terminal device receives the msg4 or msgB message from the network device). For example, in a most likely case, the network device configures the timing advance command reception window to take effect only after contention resolution (Contention Resolution) of the terminal device succeeds, and then the terminal device updates the TA based on the first indication information in step S407. This step can make the terminal device more energy-efficient.

Specifically, for the method for determining the TA or updating the TA based on the first indication information, refer to the foregoing embodiments. Details are not described herein again in this application.

S410: The location management device sends a third request message to the network device. Correspondingly, the network device receives the third request message from the location management device. The third request message is used to request measurement information.

Optionally, the third request message may be carried in an NR positioning protocol (NR positioning protocol annex, NRPPa) message. That is, the location management device may request the measurement information from the network device by using the NRPPa message.

S411: The network device performs related measurement to obtain a measurement result.

It should be understood that the terminal device in the RRC_INACTIVE state sends the SRS to the network device at a corresponding time based on the TA value and the SRS configuration information. Correspondingly, the network device performs measurement on the SRS to obtain a measurement result.

In a possible implementation, the network device may be the serving base station or the neighboring cell positioning reference base station. The serving base station and the neighboring cell positioning reference base station perform related measurement on the SRS.

S412: The network device sends a third response message to the location management device. Correspondingly, the location management device receives the third response message from the network device. The third response message carries or includes measurement information provided by the network device for the location management device. For example, the measurement information is the measurement result of the SRS.

S413: The location management device calculates a location of the terminal device based on the measurement result and other positioning-related information.

Optionally, in this embodiment of this application, based on different initiation manners of the positioning procedure, the positioning method provided in this embodiment of this application may further include the following step S414.

S414: The location management device sends location information of the terminal device to the access and mobility management device. Correspondingly, the access and mobility management device receives the location information of the terminal device sent by the location management device.

Optionally, in this embodiment of this application, if the foregoing positioning procedure is initiated by the terminal device or the third-party device or the function such as the 5GC LCS entity (that is, step S401b is performed), the positioning method provided in this embodiment of this application further includes the following steps S414a and S414b.

S414a: The access and mobility management device sends the location information of the terminal device to the terminal device. Correspondingly, the terminal device receives the location information of the terminal device sent by the access and mobility management device.

A person skilled in the art should understand that, before receiving the location information, the terminal device establishes a connection to the network device, and enters the connected state.

S414b: The access and mobility management device sends the location information of the terminal device to the third-party device or the function (for example, the 5GC LCS entity). Correspondingly, the third-party device or the function receives the location information of the terminal device sent by the access and mobility management device.

The foregoing embodiment is an implementation method for terminal positioning. In this embodiment, the terminal device in the RRC_INACTIVE state may receive the TAC based on TA-related indication information, and determine the TA value. The terminal device in the RRC _INACTIVE state sends the SRS based on the determined TA and the SRS configuration information, to assist in positioning in the non-connected state. Compared with sending the SRS in the connected state RRC_CONNECTED for positioning, power consumption can be reduced.

It should be noted that, for determining the TA value by the terminal device in an RRC_IDLE state, refer to the foregoing embodiment in the RRC_INACTIVE state. Details are not described herein again in this application.

FIG. 5A and FIG. 5B are a schematic flowchart of another terminal positioning method 500 according to an embodiment of this application. In FIG. 5A and FIG. 5B, an example in which a serving base station (for example, a gNB) and a neighboring base station (for example, a gNB) are used as network devices is used for description. The method 500 includes at least the following steps.

In this embodiment of this application, a positioning procedure may be initiated by using the following step: S501a, S501b, S501c, or S501d.

S501a: A terminal device in a connected state sends a location request to an access and mobility management device. Correspondingly, the access and mobility management device receives the location request from the terminal device. The location request is used to request to position the terminal device.

That is, the terminal device may actively initiate the procedure of positioning the terminal device. This step is applicable to a positioning scenario of an MO-LR.

S501b: A third-party device or a function sends a location request to an access and mobility management device. Correspondingly, the access and mobility management device receives the location request from the third-party device or the function. The location request is used to request to position a terminal device.

That is, the third-party device or the function may initiate the procedure of positioning the terminal device. This step is applicable to a positioning scenario of an MT-LR.

Optionally, the third-party device or the function may be a 5G core network (5G core, 5GC) location services (location services, LCS) entity, an LCS client, an internal/external application function of a serving PLMN, or the like. For example, the 5GC LCS entity in this embodiment of this application may be, for example, a gateway mobile location center (gateway mobile location center, GMLC).

S501c: An access and mobility management device determines some location service requirements (for example, a terminal device needs an emergency call) of the terminal device in a connected state, and triggers a location request.

That is, the access and mobility management device may initiate the procedure of positioning the terminal device. This step is applicable to the foregoing positioning scenario of an NI-LR.

S501d: A network device sends a location request to an LMC by using internal signaling. Correspondingly, the LMC receives the location request from the network device. The location request is used to request to position a terminal device.

That is, the network device may initiate the procedure of positioning the terminal device. This step is applicable to the foregoing positioning scenario of an RI-LR.

It should be understood that the foregoing provides only examples of several manners of initiating the positioning procedure, and there may be another manner of initiating the positioning procedure. This is not specifically limited in this embodiment of this application. In FIG. 5A and FIG. 5B, an example in which the terminal device initiates a positioning procedure is used for description.

Further, the positioning method provided in this embodiment of this application further includes the following steps S502 to S516.

S502: The access and mobility management device sends the location request to a location management device. Correspondingly, the location management device receives the location request from the access and mobility management device. The location request is used to request to position the terminal device.

The location request sent by the access and mobility management device to the location management device may be the location request in step S501a, S501b, or S501c.

S503: The location management device sends a first request message to the terminal device in the connected state. Correspondingly, the terminal device receives the first request message from the location management device. The first request message is used to request a positioning capability of the terminal device.

Optionally, the first request message may be carried in an LPP message, that is, the location management device may request the positioning capability from the terminal device by using the LPP message.

S504: The terminal device in the connected state sends a first response message to the location management device. Correspondingly, the location management device receives the first response message from the terminal device. The first response message carries or includes the positioning capability of the terminal device.

Optionally, the first response message may be carried in an LPP message, that is, the terminal device may send the positioning capability of the terminal device to the location management device by using the LPP message.

Optionally, different from the manner of obtaining the positioning capability of the terminal device in steps S503 and S504, in this embodiment of this application, the terminal device may actively send the positioning capability of the terminal device to the location management device without a request. That is, when the positioning method provided in this embodiment is performed, step S503 may be omitted. This is not specifically limited in this embodiment of this application.

S505: The network device releases an RRC connection of the terminal device, and the terminal device enters an RRC_INACTVIE state or an RRC_IDLE state.

S506: The location management device sends a second request message to the network device. Correspondingly, the network device receives the second request message from the location management device. The second request message is used to request positioning-related information.

Optionally, the second request message may be carried in an NR positioning protocol (NR positioning protocol annex, NRPPa) message. That is, the location management device may request the positioning-related information from the network device by using the NRPPa message.

For example, the positioning-related information includes SRS configuration information.

In addition, in this embodiment of this application, the positioning-related information provided by the network device for the location management device may further include location information and related configuration information of a network device (the ng-eNB or the gNB in FIG. 1B or FIG. 1C) participating in positioning, for example, a physical cell ID (physical cell IDs, PCIs), a global cell ID (global cell IDs, GCIs), PRS configuration information, a positioning reference signal resource ID (PRS Resource ID), geographical coordinates of a network device (for example, a TRP), and timing information of a network device. This is not limited in this application.

S507: The network device determines related configuration of an uplink sounding reference signal UL SRS.

For example, the UL SRS configuration information may include an SRS type, for example, a periodic SRS, an aperiodic SRS, and a semi-persistent SRS. The UL SRS configuration information may alternatively include an RE pattern related-parameter, including a comb size, a cyclic shift, and the like. The UL SRS configuration information may alternatively include resource mapping information, including a start symbol location, a quantity of symbols, and the like. This application sets no specific limitation thereto.

S508: The network device sends a second response message to the location management device. Correspondingly, the location management device receives the second response message from the network device. The second response message carries or includes the positioning-related information provided by the network device for the location management device.

Optionally, the second response message may be carried in an NR positioning protocol (NR positioning protocol annex, NRPPa) message. That is, the network device may send positioning auxiliary data to the location management device by using the NRPPa message.

S509: The network device pages the terminal device in the RRC_INACTIVE state or the RRC_IDLE state, and triggers UE to initiate a random access process to obtain an initial TA.

For example, the network device may page the terminal device in the RRC_INACTIVE state or the RRC_IDLE state by using a paging message carrying an I-RNTI, and trigger the UE to initiate random access, for example, newly add a paging cause (for example, positioning).

It should be noted that, when initiating the random access process, the terminal device obtains the initial TA by using a msg2 or a msgB message, releases the RRC connection after receiving a msg4 or a msgB message from the network device, and remains in a non-connected state.

Optionally, after initiating the random access process, the terminal device may further activate an SRS.

Further, the terminal device starts to monitor the radio network temporary identifier of the timing advance command only after contention resolution (Contention Resolution) succeeds (that is, the terminal device receives the msg4 or msgB message from the network device). For example, in a most likely case, the network device configures the timing advance command reception window to take effect only after contention resolution (Contention Resolution) of the terminal device succeeds, and then the terminal device updates the TA based on the first indication information in step S407. This step can make the terminal device more energy-efficient.

Specifically, for the method for determining the TA or updating the TA based on the first indication information, refer to the foregoing embodiments. Details are not described herein again in this application.

S510: After receiving the paging message, the terminal device in the RRC_INACTIVE state or the RRC_IDLE state sends a third request message to the network device. Correspondingly, the network device receives the third request message from the terminal device in the RRC_INACTIVE state or the RRC_IDLE state. The third request message is used to request to establish the RRC connection.

Optionally, the third request message may be carried in an RRC Resume message. Correspondingly, the network device responds to the third request message from the terminal device in the RRC_INACTIVE state or the RRC_IDLE state.

S511: The network device releases the RRC connection of the terminal device again, and the terminal device enters the RRC_INACTIVE state again.

For example, the network device carries the first indication information in an RRC Release message or a paging message, and the first indication information is used to determine a TA value of the terminal device in the RRC_INACTIVE state. Optionally, the first indication information includes one or more pieces of the following information: a radio network temporary identifier of a timing advance command, a timing advance command sending period, timing advance command duration, and a timing advance command reception window. Optionally, the RRC Release message or the paging message further carries the positioning-related information, for example, the SRS configuration information.

Specifically, for the method for determining the TA based on the first indication information, refer to the foregoing embodiments. Details are not described herein again in this application.

Optionally, the network device carries second indication information in the RRC Release message or the paging message, where the second indication information is used to indicate a candidate time-frequency location of a physical downlink control channel PDCCH. For example, the second indication information includes a control resource set identifier and a search space identifier.

Optionally, the network device may also send the first indication information to the terminal device before releasing the RRC connection, or send the first indication information and the second indication information to the terminal device.

S512: The terminal device sends an SRS to the network device based on the TA value and the SRS configuration information.

Optionally, after sending the SRS, the terminal device enters the RRC_IDLE state.

In a possible implementation, the network device may be a serving base station or a neighboring cell positioning reference base station. The terminal device sends the SRS in a broadcast manner, and both the serving base station and the neighboring cell positioning reference base station receive the SRS.

S513: The location management device sends a third request message to the network device. Correspondingly, the network device receives the third request message from the location management device. The third request message is used to request measurement information.

Optionally, the third request message may be carried in an NR positioning protocol (NR positioning protocol annex, NRPPa) message. That is, the location management device may request the measurement information from the network device by using the NRPPa message.

S514: The network device performs related measurement, to obtain a measurement result.

In a possible implementation, the terminal device in the RRC_INACTIVE state sends the SRS to the network device based on the TA value and the SRS configuration information. The network device may be the serving base station or the neighboring cell positioning reference base station. The serving base station and the neighboring cell positioning reference base station perform related measurement on the SRS, to obtain a measurement result.

S515: The network device sends a third response message to the location management device. Correspondingly, the location management device receives the third response message from the network device. The third response message carries or includes the measurement information provided by the network device for the location management device. For example, the measurement information is the measurement result of the SRS.

S516: The location management device calculates a location of the terminal device based on the measurement result and other positioning-related information.

Optionally, in this embodiment of this application, based on different initiation manners of the positioning procedure, the positioning method provided in this embodiment of this application may further include the following step S517.

S517: The location management device sends location information of the terminal device to the access and mobility management device. Correspondingly, the access and mobility management device receives the location information of the terminal device sent by the location management device.

Optionally, in this embodiment of this application, if the foregoing positioning procedure is initiated by the terminal device or the third-party device or the function such as the 5GC LCS entity (that is, step S501b is performed), the positioning method provided in this embodiment of this application further includes the following steps S517a and S517b.

S517a: The access and mobility management device sends the location information of the terminal device to the terminal device. Correspondingly, the terminal device receives the location information of the terminal device sent by the access and mobility management device.

A person skilled in the art should understand that, before receiving the location information, the terminal device establishes a connection to the network device, and enters the connected state.

S517b: The access and mobility management device sends the location information of the terminal device to the third-party device or the function (for example, the 5GC LCS entity). Correspondingly, the third-party device or the function receives the location information of the terminal device sent by the access and mobility management device.

The foregoing embodiment is another implementation method for terminal positioning. In this embodiment, the terminal device releases the RRC connection of the terminal device immediately after reporting the positioning capability. When positioning needs to be performed subsequently, the network device initiates paging on the terminal device in the RRC_INACTIVE state or the RRC_IDLE state, re-establishes the RRC connection, and releases the connection again, so that the terminal device enters the RRC_INACTIVE state again. The terminal device in the RRC_INACTIVE state may receive the TAC based on TA-related indication information, and determine the TA value. The terminal device in the RRC_INACTIVE state sends the SRS based on the determined TA and the SRS configuration information, to assist in positioning in the non-connected state, thereby further reducing power consumption.

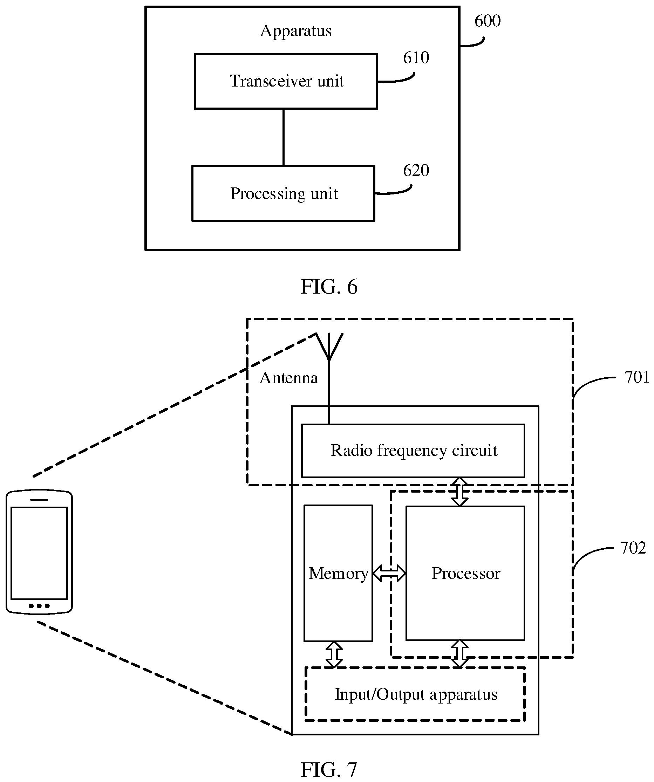

An embodiment of this application further provides an apparatus 600. The apparatus 600 may be a terminal device or a chip on a terminal device. FIG. 6 is a schematic block diagram of an apparatus 600 according to an embodiment of this application. The apparatus 600 includes a transceiver unit 610 and a processing unit 620. The transceiver unit 610 may communicate with the outside, and the processing unit 620 is configured to perform data processing. The transceiver unit 610 may also be referred to as a communication interface or a communication unit.

The apparatus 600 may be configured to perform actions performed by the terminal device in the foregoing method embodiments. The transceiver unit 610 is configured to perform a receiving/sending-related operation on a terminal device side in the foregoing method embodiments, and the processing unit 620 is configured to perform a processing-related operation of the terminal device in the foregoing method embodiments.

In an embodiment provided in this application, the transceiver unit 610 and the processing unit 620 are configured to perform related steps performed by the terminal device in the method for determining the TA shown in FIG. 3.

The transceiver unit 610 is configured to receive first indication information from a network device, where the first indication information includes one or more pieces of the following information:
a radio network temporary identifier of a timing advance command, a timing advance command sending period, timing advance command duration, and a timing advance command reception window.

The processing unit 620 is configured to determine a TA of the terminal device in a non-connected state based on the first indication information.

In a possible implementation, the transceiver unit 610 is further configured to receive second indication information from the network device, where the second indication information is used to indicate a candidate time-frequency location of a physical downlink control channel PDCCH.

In a possible implementation, the first indication information is carried in an RRC Release message or a paging message.

In a possible implementation, the second indication information is carried in the RRC Release message or the paging message.

In a possible implementation, the second indication information includes a control resource set identifier and a search space identifier.

In a possible implementation, the transceiver unit 610 receives, based on the first indication information and the second indication information, a TAC periodically delivered by the network device. The processing unit 620 determines the TA of the terminal device based on the TAC.

In a possible implementation, the RRC Release message or the paging message further includes time-frequency resource configuration information of a sounding reference signal.

In a possible implementation, the transceiver unit 610 sends a sounding reference signal SRS to the network device based on the time-frequency resource configuration information of the sounding reference signal.

In a possible implementation, the SRS is used to assist in positioning of the terminal device in the non-connected state.

Optionally, the transceiver unit 610 and the processing unit 620 may be further configured to perform steps in the embodiment shown in FIG. 4, for example:

The transceiver unit 610 is configured to send a location request to an access and mobility management device. The location request is used to request to position the terminal device.

The transceiver unit 610 is further configured to receive a first request message sent by a location management device. The first request message is used to request a positioning capability of the terminal device.

The transceiver unit 610 is further configured to send a first response message to the location management device. The first response message carries or includes the positioning capability of the terminal device.

The transceiver unit 610 is further configured to receive first indication information from the network device, where the first indication information includes at least one or more pieces of the following information: a radio network temporary identifier of a timing advance command, a timing advance command sending period, timing advance command duration, and a timing advance command reception window.

The transceiver unit 610 is further configured to receive second indication information from the network device, where the second indication information is used to indicate a candidate time-frequency location of a physical downlink control channel PDCCH. Optionally, the second indication information includes a control resource set identifier and a search space identifier.

The transceiver unit 610 is further configured to send an SRS to the network device based on a TA value and SRS configuration information.

The processing unit 620 is configured to determine a TA of the terminal device in a non-connected state based on the first indication information.

The processing unit 620 is further configured to determine the TA of the terminal device in the non-connected state based on the first indication information and the second indication information.

All related content of the steps in the method embodiments may be cited in function descriptions of corresponding functional units. Details are not described herein again.

In another embodiment provided in this application, the transceiver unit 610 and the processing unit 620 are configured to perform related steps performed by the terminal device in the embodiment shown in FIG. 5A and FIG. 5B, for example:

The transceiver unit 610 is configured to receive a paging paging message from a network device.

The transceiver unit 610 is further configured to send a third request message to the network device, where the third request message is used to request to establish an RRC connection.

The transceiver unit 610 is further configured to receive first indication information from the network device, where the first indication information includes at least one or more pieces of the following information: a radio network temporary identifier of a timing advance command, a timing advance command sending period, timing advance command duration, and a timing advance command reception window.

The transceiver unit 610 is further configured to receive second indication information from the network device, where the second indication information is used to indicate a candidate time-frequency location of a physical downlink control channel PDCCH. Optionally, the second indication information includes a control resource set identifier and a search space identifier.

The transceiver unit 610 is further configured to send an SRS to the network device based on a TA value and SRS configuration information.

The processing unit 620 is configured to determine a TA of the terminal device in a non-connected state based on the first indication information.

The processing unit 620 is further configured to determine the TA of the terminal device in the non-connected state based on the first indication information and the second indication information.

All related content of the steps in the method embodiments may be cited in function descriptions of corresponding functional units. Details are not described herein again.

It should be understood that FIG. 6 is merely an example and not limitation. The foregoing terminal device including the transceiver unit and the processing unit may not depend on the structure shown in FIG. 6.

When the apparatus 600 is a chip, the chip includes a transceiver unit and a processing unit. The transceiver unit may be an input/output circuit or a communication interface. The processing unit may be a processor, a microprocessor, or an integrated circuit integrated on the chip.

In this embodiment, the apparatus 600 is presented in a form of dividing each functional unit in an integrated manner. The "unit" herein may be a specific ASIC, a circuit, a processor and a memory that execute one or more software or firmware programs, an integrated logic circuit, and/or another component that can provide the foregoing functions.

FIG. 7 is a schematic diagram of a simplified structure of a terminal 700. For ease of understanding and convenience of illustration, in FIG. 7, an example in which the terminal is a mobile phone is used. As shown in FIG. 7, the terminal includes a processor, a memory, a radio frequency circuit, an antenna, and an input/output apparatus. The processor is mainly configured to: process a communication protocol and communication data, control the terminal, execute a software program, process data of the software program, and the like. The memory is mainly configured to store a software program and data. The radio frequency circuit is mainly configured to perform conversion between a baseband signal and a radio frequency signal and process the radio frequency signal. The antenna is mainly configured to receive and send radio frequency signals in a form of an electromagnetic wave. The input/output apparatus, for example, a touchscreen, a display, or a keyboard, is mainly configured to receive data entered by a user and output data to the user. It should be noted that some types of terminals may have no input/output apparatus.

When data needs to be sent, the processor performs baseband processing on the to-be-sent data, and then outputs a baseband signal to the radio frequency circuit. The radio frequency circuit performs radio frequency processing on the baseband signal and then sends a radio frequency signal to the outside in a form of an electromagnetic wave through the antenna. When data is sent to the terminal, the radio frequency circuit receives a radio frequency signal through the antenna, converts the radio frequency signal into a baseband signal, and outputs the baseband signal to the processor. The processor converts the baseband signal into data, and processes the data. For ease of description, only one memory and one processor are shown in FIG. 7. An actual terminal product may include one or more processors and one or more memories. The memory may also be referred to as a storage medium, a storage device, or the like. The memory may be disposed independent of the processor, or may be integrated with the processor. This is not limited in this embodiment of this application.

In this embodiment of this application, an antenna and a radio frequency circuit that have receiving and sending functions may be considered as a receiving unit and a sending unit (or collectively referred to as a transceiver unit) of the terminal, and a processor that has a processing function is considered as a processing unit of the terminal. As shown in FIG. 7, the terminal includes a transceiver unit 701 and a processing unit 702. The transceiver unit 701 may also be referred to as a receiver/transmitter, a receiver/transmitter circuit, or the like. The processing unit 702 may also be referred to as a processor, a processing board, a processing module, a processing apparatus, or the like.

For example, in an embodiment, the transceiver unit 701 may be configured to perform an action of the terminal in step S301 in the embodiment shown in FIG. 3. The processing unit 702 is configured to perform step S302 in the embodiment shown in FIG. 3.

For example, in another embodiment, the transceiver unit 701 is configured to perform actions of the terminal in steps S404 and S409 in the embodiment shown in FIG. 4. The processing unit 702 is configured to calculate a TA value after performing step S407 in the embodiment shown in FIG. 4.

For example, in another embodiment, the transceiver unit 701 is configured to perform actions of the terminal in steps S504, S512, and S517a in the embodiment shown in FIG. 5A and FIG. 5B. The processing unit 702 is configured to calculate a TA value after performing step S511 in the embodiment shown in FIG. 5A and FIG. 5B.

All related content of the steps in the method embodiments may be cited in function descriptions of corresponding functional components. Details are not described herein again.

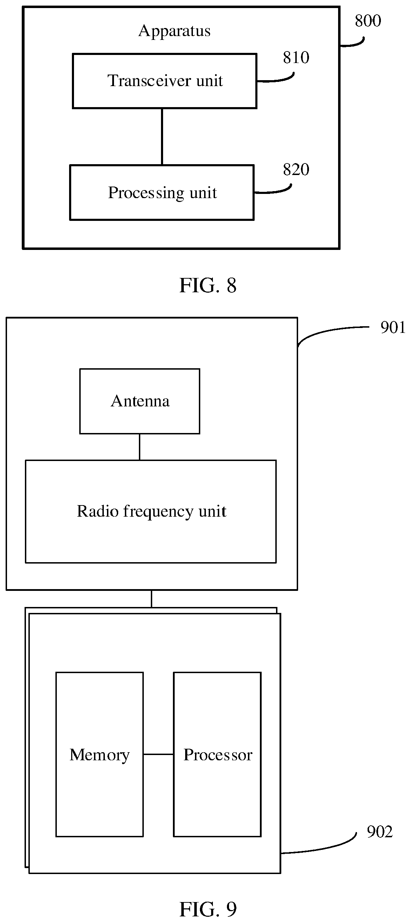

An embodiment of this application further provides an apparatus 800. The apparatus 800 may be a network device or a chip on a network device. FIG. 8 is a schematic block diagram of an apparatus 800 according to an embodiment of this application. The apparatus 800 includes a transceiver unit 810 and a processing unit 820. The transceiver unit 810 may communicate with the outside, and the processing unit 820 is configured to perform data processing. The transceiver unit 810 may also be referred to as a communication interface or a communication unit.

The apparatus 800 may be configured to perform actions performed by the network device in the foregoing method embodiments. The transceiver unit 810 is configured to perform a receiving/sending-related operation on a network device side in the foregoing method embodiments, and the processing unit 820 is configured to perform a processing-related operation on the network device side in the foregoing method embodiments.

In an embodiment provided in this application, the transceiver unit 810 and the processing unit 820 are configured to perform related steps performed by the network device in the method for determining the TA shown in FIG. 3.

The transceiver unit 810 is configured to send first indication information to a terminal device in a non-connected state, where the first indication information includes one or more pieces of the following information: a radio network temporary identifier of a timing advance command, a timing advance command sending period, timing advance command duration, and a timing advance command reception window. The first indication information is used by the terminal device in the non-connected state to determine a TA value.

The processing unit 820 is configured to perform processing by using the transceiver unit 810.

In a possible implementation, the transceiver unit 810 is configured to send second indication information to the terminal device, where the second indication information is used to indicate a candidate time-frequency location of a physical downlink control channel PDCCH.

In a possible implementation, the first indication information is carried in an RRC Release message or a paging message.

In a possible implementation, the second indication information is carried in the RRC Release message or the paging message.

In a possible implementation, the second indication information includes a control resource set identifier and a search space identifier.

In a possible implementation, the transceiver unit 810 is configured to periodically send a timing advance command TAC.

In a possible implementation, the RRC Release message or the paging message further includes time-frequency resource configuration information of a sounding reference signal.

In a possible implementation, the transceiver unit 810 is configured to receive a sounding reference signal SRS sent by the terminal device, and the processing unit 820 is configured to perform related measurement on the SRS, to obtain a measurement result, where the measurement result is used to assist in positioning of the terminal device in the non-connected state.

All related content of the steps in the method embodiments may be cited in function descriptions of corresponding functional units. Details are not described herein again.

In an embodiment provided in this application, the transceiver unit 810 and the processing unit 820 are configured to perform related steps performed by the network device in the positioning method shown in FIG. 4 or FIG. 5A and FIG. 5B, for example:

The transceiver unit 810 is configured to send first indication information to a terminal device in a non-connected state, where the first indication information includes one or more pieces of the following information: a radio network temporary identifier of a timing advance command, a timing advance command sending period, timing advance command duration, and a timing advance command reception window. The first indication information is used by the terminal device in the non-connected state to determine a TA value. For example, the first indication information may be carried in an RRC Release or a paging message. Optionally, the RRC Release or the paging message further carries positioning-related information, such as SRS configuration information.

The transceiver unit 810 is configured to send second indication information to the terminal device in the non-connected state.

The transceiver unit 810 is configured to send a third response message to a location management device, where the third response message includes measurement information provided by a network device for the location management device. For example, the measurement information is a measurement result of an SRS.

The processing unit 820 is configured to determine a related configuration of an uplink sounding reference signal UL SRS.

The processing unit 820 is configured to perform related measurement on an SRS sent by the terminal device, to obtain a measurement result.

All related content of the steps in the method embodiments may be cited in function descriptions of corresponding functional units. Details are not described herein again.

It should be understood that FIG. 8 is merely an example and not limitation. The foregoing apparatus including the transceiver unit and the processing unit may not depend on the structure shown in FIG. 8.

When the apparatus 800 is a chip, the chip includes a transceiver unit and a processing unit. The transceiver unit may be an input/output circuit or a communication interface. The processing unit is a processor, a microprocessor, or an integrated circuit integrated on the chip.

In this embodiment, the apparatus 800 is presented in a form of dividing each functional unit in an integrated manner. The "unit" herein may be a specific ASIC, a circuit, a processor and a memory that execute one or more software or firmware programs, an integrated logic circuit, and/or another component that can provide the foregoing functions.

FIG. 9 is a schematic diagram of a simplified structure of a network device 900. For ease of understanding and convenience of illustration, in FIG. 9, an example in which the network device is a base station is used. The base station includes a radio frequency signal receiving/sending and conversion part, and a part 902. The radio frequency signal receiving/sending and conversion part further include a transceiver unit part 901. The radio frequency signal receiving/sending and conversion part is mainly used for receiving/sending of a radio frequency signal and conversion of a radio frequency signal and a baseband signal. The part 902 is mainly used for baseband processing, base station control, and the like. The transceiver unit 901 may also be referred to as a receiver/transmitter, a receiver/transmitter circuit, or the like. The part 902 is usually a control center of the base station, and may be usually referred to as a processing unit, and is configured to control a source base station to perform steps performed by the base station in FIG. 3, FIG. 4, and FIG. 5A and FIG. 5B.

The part 902 may include one or more boards. Each board may include one or more processors and one or more memories. The processor is configured to read and execute a program in the memory to implement a baseband processing function and control of the base station. If there is a plurality of boards, the boards may be interconnected to improve a processing capability. In an optional implementation, a plurality of boards may share one or more processors, or a plurality of boards may share one or more memories, or a plurality of boards may simultaneously share one or more processors.

For example, in an embodiment, the transceiver unit 901 is configured to perform an action of the base station in step S301 in the embodiment shown in FIG. 3.

For example, in another embodiment, the transceiver unit 901 is configured to perform actions of the base station in steps S408 and S412 in the embodiment shown in FIG. 4. The processing unit 902 is configured to perform steps S406 and S411 in the embodiment shown in FIG. 4.

For example, in an embodiment, the transceiver unit 901 is configured to perform actions of the base station in steps S508, S509, and S515 in the embodiment shown in FIG. 5A and FIG. 5B. The processing unit 902 is configured to perform steps S507 and S514 in the embodiment shown in FIG. 5A and FIG. 5B.

All related content of the steps in the method embodiments may be cited in function descriptions of corresponding functional units. Details are not described herein again.

An embodiment of this application further provides a system. The system includes at least the network device in the embodiment shown in FIG. 3, FIG. 4, or FIG. 5A and FIG. 5B, the terminal device in the embodiment shown in FIG. 3, FIG. 4, or FIG. 5A and FIG. 5B, and may further include a location management device, an access and mobility management device, and the like that participate in positioning.

An embodiment of this application further provides a computer-readable storage medium. The computer-readable storage medium stores a computer program. When the computer program is executed by a computer, the computer is enabled to implement the method performed by the terminal device in the method embodiment shown in FIG. 3, FIG. 4, or FIG. 5A and FIG. 5B.

An embodiment of this application further provides a computer-readable storage medium. The computer-readable storage medium stores a computer program. When the computer program is executed by a computer, the computer is enabled to implement the method performed by the network device in the method embodiment shown in FIG. 3, FIG. 4, or FIG. 5A and FIG. 5B.

An embodiment of this application further provides a computer program product that includes a computer program. When the computer program is executed by a computer, the computer is enabled to implement the method performed by the terminal device in the method embodiment shown in FIG. 3, FIG. 4, or FIG. 5A and FIG. 5B.

An embodiment of this application further provides a computer program product that includes a computer program. When the computer program is executed by a computer, the computer is enabled to implement the method performed by the network device in the method embodiment shown in FIG. 3, FIG. 4, or FIG. 5A and FIG. 5B.

An embodiment of this application further provides a chip system. The chip system includes at least one processor and an interface. The at least one processor is coupled to a memory by using the interface. When the at least one processor executes a computer program or computer-executable instructions in the memory, the chip system is configured to implement the method performed by the terminal device in the foregoing method embodiment shown in FIG. 3, FIG. 4, or FIG. 5A and FIG. 5B.

An embodiment of this application further provides a chip system. The chip system includes at least one processor and an interface. The at least one processor is coupled to a memory by using the interface. When the at least one processor executes a computer program or computer-executable instructions in the memory, the chip system is configured to implement the method performed by the network device in the foregoing method embodiment shown in FIG. 3, FIG. 4, or FIG. 5A and FIG. 5B.

For explanations and beneficial effects of related content in any communication apparatus provided above, refer to the foregoing corresponding method embodiments. Details are not described herein again.

In embodiments of this application, the terminal device or the network device includes a hardware layer, an operating system layer running above the hardware layer, and an application layer running above the operating system layer. The hardware layer includes a central processing unit (central processing unit, CPU), a memory management unit (memory management unit, MMU), and a memory (which is also referred to as a main memory). The operating system may be any one or more computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device or the network device, or a functional module that can invoke and execute the program in the terminal device or the network device.

In addition, aspects or features of this application may be implemented as a method, an apparatus, or a product that uses standard programming and/or engineering technologies. A "product" to which the methods provided in this application are applied covers a computer program that can be accessed by using any computer-readable device, carrier, or medium. For example, the computer-readable medium may include but is not limited to: a magnetic storage component (for example, a hard disk, a floppy disk, or a magnetic tape), an optical disc (for example, a compact disc (compact disc, CD) or a digital versatile disc (digital versatile disc, DVD)), a smart card, and a flash memory component (for example, an erasable programmable read-only memory (erasable programmable read-only memory, EPROM), a card, a stick, or a key drive). In addition, various storage media described in this specification may indicate one or more devices and/or other machine-readable media that are configured to store information. The term "machine-readable media" may include but is not limited to a wireless channel, and various other media that can store, include, and/or carry instructions and/or data.

It should be understood that, the processor in embodiments of this application may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be further understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (random access memory, RAM) and is used as an external cache. By way of example and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that when the processor is a general-purpose processor, a DSP, an ASIC, an FPGA, or another programmable logic device, discrete gate or transistor logic device, or discrete hardware component, the memory (a storage module) is integrated into the processor.

It should be noted that the memory described in this specification is intended to include but not limited to these memories and any memory of another appropriate type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The foregoing readable storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims and/or the specification.

**Claims**

1. A method for determining a timing advance TA, comprising:
   receiving, by a terminal device in a non-connected state, first indication information from a network device, wherein the first indication information comprises one or more pieces of the following information:

   a radio network temporary identifier of a timing advance command, a timing advance command sending period, timing advance command duration, and a timing advance command reception window; and
   determining, by the terminal device, a TA of the terminal device in the non-connected state based on the first indication information.

2. The method according to claim 1, wherein the method further comprises:
   receiving, by the terminal device in the non-connected state, second indication information from the network device, wherein the second indication information is used to indicate a candidate time-frequency location of a physical downlink control channel PDCCH.

3. The method according to claim 1, wherein the first indication information is carried in a radio resource control release RRC Release message or a paging message.

4. The method according to claim 2 or 3, wherein the second indication information is carried in the radio resource control release RRC Release message or the paging message.

5. The method according to claim 2 or 4, wherein the second indication information comprises a control resource set identifier and a search space identifier.

6. The method according to any one of claims 1 to 5, wherein the determining, by the terminal device, a TA of the terminal device in the non-connected state based on the first indication information and the second indication information specifically comprises:

   receiving, by the terminal device, a periodic timing advance command TAC from the network device based on the first indication information and the second indication information; and
   determining, by the terminal device, the TA of the terminal device based on the TAC.

7. The method according to any one of claims 1 to 5, wherein the determining, by the terminal device, a TA of the terminal device in the non-connected state based on the first indication information specifically comprises:

   parsing, by the terminal device based on the radio network temporary identifier of the timing advance command, downlink control information DCI that carries the timing advance command TAC;
   receiving, by the terminal device based on the DCI and the timing advance command sending period, the TAC periodically delivered by the network device; and
   determining, by the terminal device, the TA of the terminal device based on the TAC.

8. The method according to claim 1 or 3, wherein the RRC Release message or the paging message further comprises time-frequency resource configuration information of a sounding reference signal.

9. The method according to claim 8, wherein the method further comprises:
   sending, by the terminal device in the non-connected state, a sounding reference signal SRS to the network device based on the time-frequency resource configuration information of the sounding reference signal.

10. The method according to claim 8 or 9, wherein the SRS is used to assist in positioning of the terminal device in the non-connected state.

11. A method for determining a timing advance TA, comprising:

sending, by a network device, first indication information to a terminal device in a non-connected state, wherein the first indication information comprises one or more pieces of the following information:

a radio network temporary identifier of a timing advance command, a timing advance command sending period, timing advance command duration, and a timing advance command reception window; and
the first indication information is used by the terminal device to determine a TA of the terminal device in the non-connected state.

12. The method according to claim 11, wherein the method further comprises:
sending, by the network device, second indication information to the terminal device in the non-connected state, wherein the second indication information is used to indicate a candidate time-frequency location of a physical downlink control channel PDCCH.

13. The method according to claim 11, wherein the first indication information is carried in a radio resource control release RRC Release message or a paging message.

14. The method according to claim 11 or 12, wherein the second indication information is carried in a radio resource control release RRC Release message or a paging message.

15. The method according to claim 12 or 14, wherein the second indication information comprises a control resource set identifier and a search space identifier.

16. The method according to any one of claims 11 to 15, wherein the method further comprises:
periodically sending, by the network device, the timing advance command TAC to the terminal device in the non-connected state.

17. The method according to claim 13 or 14, wherein the RRC Release message or the paging message further comprises time-frequency resource configuration information of a sounding reference signal.

18. The method according to claim 17, wherein the method further comprises:
performing related measurement, by the network device, on a sounding reference signal SRS sent by the terminal device in the non-connected state, to obtain a measurement result, wherein the measurement result is used to assist in positioning of the terminal device in the non-connected state.

19. A terminal device, comprising:
a transceiver unit, configured to receive first indication information from a network device, wherein the first indication information comprises one or more pieces of the following information:

a radio network temporary identifier of a timing advance command, a timing advance command sending period, timing advance command duration, and a timing advance command reception window; and
a processing unit, configured to determine a TA of the terminal device in the non-connected state based on the first indication information.

20. The terminal device according to claim 19, wherein the transceiver unit is further configured to receive second indication information from the network device, wherein the second indication information is used to indicate a candidate time-frequency location of a physical downlink control channel PDCCH.

21. The terminal device according to claim 19, wherein the first indication information is carried in a radio resource control release RRC Release message or a paging message.

22. The terminal device according to claim 19 or 20, wherein the second indication information is carried in a radio resource control release RRC Release message or a paging message.

23. The terminal device according to claim 20 or 22, wherein the second indication information comprises a control resource set identifier and a search space identifier.

24. The terminal device according to any one of claims 19 to 23, wherein the transceiver unit is configured to:

receive a periodic TAC from the network device based on the first indication information and the second indication information; and

the processing unit is configured to determine the TA of the terminal device based on the TAC.

**25.** The terminal device according to any one of claims 19 to 23, wherein the processing unit is configured to:

parse, based on the radio network temporary identifier of the timing advance command, downlink control information DCI that carries the timing advance command TAC;

the transceiver unit is configured to receive, based on the DCI and the timing advance command sending period, the TAC periodically delivered by the network device; and

the processing unit is configured to determine the TA of the terminal device based on the TAC.

**26.** The terminal device according to claim 21 or 22, wherein the RRC Release message or the paging message further comprises time-frequency resource configuration information of a sounding reference signal.

**27.** The terminal device according to claim 19, wherein the transceiver unit is further configured to:
send a sounding reference signal SRS to the network device based on the time-frequency resource configuration information of the sounding reference signal.

**28.** The terminal device according to claim 26 or 27, wherein the SRS is used to assist in positioning of the terminal device in the non-connected state.

**29.** A network device, comprising:
a transceiver unit, configured to send first indication information to a terminal device in a non-connected state, wherein the first indication information comprises one or more pieces of the following information:

a radio network temporary identifier of a timing advance command, a timing advance command sending period, timing advance command duration, and a timing advance command reception window, wherein
the first indication information is used by the terminal device to determine a TA of the terminal device in the non-connected state; and
a processing unit, configured to perform processing by using the transceiver unit.

**30.** The network device according to claim 29, wherein the transceiver unit is further configured to send second indication information to the terminal device in the non-connected state, wherein the second indication information is used to indicate a candidate time-frequency location of a physical downlink control channel PDCCH.

**31.** The network device according to claim 29, wherein the first indication information is carried in a radio resource control release RRC Release message or a paging message.

**32.** The network device according to claim 30, wherein the second indication information is carried in a radio resource control release RRC Release message or a paging message.

**33.** The network device according to claim 30 or 32, wherein the second indication information comprises a control resource set identifier and a search space identifier.

**34.** The network device according to any one of claims 29 to 33, wherein the transceiver unit is configured to periodically send a timing advance command TAC.

**35.** The network device according to claim 31 or 32, wherein the RRC Release message or the paging message further comprises time-frequency resource configuration information of a sounding reference signal.

**36.** The network device according to claim 29, wherein the transceiver unit is configured to:

receive a sounding reference signal SRS sent by the terminal device in the non-connected state; and
the processing unit is configured to perform related measurement on the SRS, to obtain a measurement result, wherein the measurement result is used to assist in positioning of the terminal device in the non-connected state.

**37.** An apparatus, comprising a processor, configured to execute a program stored in a memory, wherein when the program is executed, the apparatus performs the method according to any one of claims 1 to 10 or the method according to any one of claims 11 to 18.

38. An apparatus, comprising a processor and a memory, wherein the memory is configured to store a program, the processor is configured to execute the program stored in the memory, and when the program is executed, the apparatus performs the method according to any one of claims 1 to 10 or the method according to any one of claims 11 to 18.

39. A chip system, comprising at least one processor and an interface, wherein the at least one processor is coupled to a memory by using the interface, and when the at least one processor executes a computer program or computer-executable instructions in the memory, the method according to any one of claims 1 to 10 or the method according to any one of claims 11 to 18 is performed.

40. A computer-readable storage medium, storing a computer program, wherein when the computer program is executed by a computer, the method according to any one of claims 1 to 10 or the method according to any one of claims 11 to 18 is performed.

41. A computer program product, comprising a computer program, wherein when the computer program product is run on a computer, the method according to any one of claims 1 to 10 or the method according to any one of claims 11 to 18 is performed.

42. A system, wherein the system comprises a terminal device and a network device, the terminal device is configured to implement the method according to any one of claims 1 to 10, and the network device is configured to implement the method according to any one of claims 11 to 18.

Terminal — Network device

Positioning device

FIG. 1A

TP

ng-eNB

TP

LMF

LTE-Uu

Xn

NG-C

NLs

Terminal device

NR-Uu

gNB

NG-C

AMF

NG-RAN device

FIG. 1B

FIG. 1C

| Uplink frame $i$ |
| --- |

| Downlink frame $i$ |
| --- |

Timing advance TA

FIG. 2

| Terminal device |
| --- |

| Network device |
| --- |

S301: Send first indication
information

| S302: Determine a TA value based on the first indication information |
| --- |

FIG. 3

FIG. 4

FIG. 5A

CONT.
FROM
FIG. 5A

CONT.
FROM
FIG. 5A

CONT.
FROM
FIG. 5A

S511: Release the
RRC connection

S512: Send
the UL SRS

S513: Request measurement information

S514: Perform measurement on the SRS

S515: Send measurement information of the SRS

S516: Calculate
a location

S517:
Location
information
of the
terminal
device

S517a: Location information of the terminal device

The terminal device is in the inactive state

FIG. 5B

Apparatus
600

Transceiver unit
610

Processing unit
620

FIG. 6

Antenna

Radio frequency circuit
701

Memory
Processor
702

Input/Output apparatus

FIG. 7

Apparatus 800

Transceiver unit 810

Processing unit 820

FIG. 8

901

Antenna

Radio frequency unit

Memory Processor

902

FIG. 9

**INTERNATIONAL SEARCH REPORT**

| International application No. |
|---|
| **PCT/CN2021/097858** |

| A. | CLASSIFICATION OF SUBJECT MATTER |
|---|---|

H04W 64/00(2009.01)i

According to International Patent Classification (IPC) or to both national classification and IPC

| B. | FIELDS SEARCHED |
|---|---|

Minimum documentation searched (classification system followed by classification symbols)

H04W

Documentation searched other than minimum documentation to the extent that such documents are included in the fields searched

Electronic data base consulted during the international search (name of data base and, where practicable, search terms used)

CNABS; CNTXT; VEN; EPTXT; USTXT; WOTXT; 3GPP; CNKI: 定时提前, 命令, 空闲态, 非激活态, 周期, 设置, 非连接态, 配置, 窗口, 持续时间, RRC INACTIVE, period, TAC, TA, duration, window, RNTI, RRC IDLE, configure

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108337728 A (ZTE CORPORATION) 27 July 2018 (2018-07-27) description, paragraphs [0021] to [0200] | 1-42 |
| X | US 2020107295 A1 (LG ELECTRONICS INC.) 02 April 2020 (2020-04-02) description, paragraphs [0065] to [0219], figure 9 | 1-42 |
| A | CN 108882260 A (SONY CORPORATION) 23 November 2018 (2018-11-23) entire document | 1-42 |
| A | CN 110896560 A (VIVO COMMUNICATION TECHNOLOGY CO., LTD.) 20 March 2020 (2020-03-20) entire document | 1-42 |

☐ Further documents are listed in the continuation of Box C.   ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **02 August 2021** | **19 August 2021** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/097858**

| Patent document cited in search report | | | Publication date (day/month/year) | Patent family member(s) | | | Publication date (day/month/year) |
|---|---|---|---|---|---|---|---|
| CN | 108337728 | A | 27 July 2018 | WO | 2018133645 | A1 | 26 July 2018 |
| US | 2020107295 | A1 | 02 April 2020 | US | 2021058898 | A1 | 25 February 2021 |
| | | | | US | 10856257 | B2 | 01 December 2020 |
| CN | 108882260 | A | 23 November 2018 | AU | 2018264196 | A1 | 02 January 2020 |
| | | | | WO | 2018205807 | A1 | 15 November 2018 |
| | | | | CN | 110291823 | A | 27 September 2019 |
| | | | | EP | 3614753 | A1 | 26 February 2020 |
| | | | | EP | 3614753 | A4 | 01 April 2020 |
| CN | 110896560 | A | 20 March 2020 | | None | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202010564722

- CN 202011150416